# EUROPEAN PATENT APPLICATION

(11) **EP 4 804 484 A1**
(43) Date of publication of application: **09.09.2026**
(21) Application number: 24893253.5
(22) Date of filing: 07.11.2024
(51) Int. Cl.: H04L 49/90

(54) **DATA FRAME SUBMISSION METHOD AND APPARATUS**

(30) Priority: 24.11.2023 CN 202311583645
(71) Applicant: Huawei Technologies Co., Ltd., Shenzhen, Guangdong 518129 (CN)
(72) Inventor: CHEN, Zheng, Shenzhen, Guangdong 518129 (CN); LI, Yunbo, Shenzhen, Guangdong 518129 (CN); XU, Yue, Shenzhen, Guangdong 518129 (CN); JI, Chenhe, Shenzhen, Guangdong 518129 (CN)
(74) Representative: Maiwald GmbH
(86) International application number: PCT/CN2024/130492
(87) International publication number: WO 2025/108095

(57) **Abstract**

This application provides a data frame delivery method and apparatus. The method includes: determining, based on an arrival status that is of a data frame corresponding to a sequence number and that is recorded in a block acknowledgment scoreboard, whether each data frame in at least one data frame with a sequence number has arrived; and for a first data frame recorded as not yet arrived in the block acknowledgment scoreboard, performing a delivery operation on the first data frame with a corresponding sequence number after the first data frame with the corresponding sequence number arrives. This can avoid repeated delivery of the data frame. This application supports an IEEE protocol, for example, the IEEE 802.11be/Wi-Fi 7/EHT protocol, the IEEE 802.11bn/UHR/Wi-Fi 8 protocol, the IEEE 802.15/UWB protocol, or the IEEE 802.11bf/sensing/sensing protocol.

## Description

### TECHNICAL FIELD

This application relates to the communication field, and in particular, to a data frame delivery method and apparatus.

### BACKGROUND

In the communication field, IEEE 802.11 wireless local area networks are also generally referred to as wireless fidelity (Wireless Fidelity, Wi-Fi) networks. With development of technologies, Wi-Fi technologies have become universal solutions for last-hop access technologies of the internet, and are continuously evolved, to further reduce a delay and improve reliability.

However, some problems still need to be resolved. For example, in 802.11 standards, when a medium access control (Medium Access Control, MAC) layer delivers, to a logical link control (Logical Link Control, LLC) layer, a medium access control protocol data unit (Medium Access Control Protocol Data Unit, MPDU), namely, a data frame of the MAC layer, a problem of repeated delivery exists, increasing overheads. How to avoid repeated delivery of the data frame becomes a problem that needs to be resolved.

### SUMMARY

This application provides a data frame delivery method and apparatus, to avoid repeated delivery.

According to a first aspect, this application provides a data frame delivery method, including: determining, based on an arrival status that is of a data frame corresponding to a sequence number and that is recorded in a block acknowledgment scoreboard, whether each data frame in at least one data frame with a sequence number has arrived; and for a first data frame recorded as not yet arrived in the block acknowledgment scoreboard, performing a delivery operation on the first data frame with a corresponding sequence number after the first data frame with the corresponding sequence number arrives.

Optionally, the data frame delivery method is performed by a data frame delivery apparatus. The apparatus is deployed in a receive end, and is referred to as a receive end for short below.

The receive end includes a block acknowledgment scoreboard used to record an arrival status of each data frame. In a data frame transmission process, each data frame sent by a transmit end correspondingly carries a sequence number. After receiving the data frame, the receive end determines an arrival status of the data frame based on the sequence number corresponding to the data frame and the corresponding block acknowledgment scoreboard. If a currently received data frame is a first data frame, and an arrival status that is in the block acknowledgment scoreboard and that corresponds to the first data frame in the corresponding is that the first data frame has not arrived, the delivery operation can be performed on the first data frame. This method for determining, based on whether the data frame has arrived, whether to perform the delivery operation can determine that each delivered data frame is a data frame that arrives for the first time, and can effectively avoid repeated delivery.

In a possible implementation, the method further includes: for a second data frame recorded as arrived in the block acknowledgment scoreboard, discarding the second data frame with a corresponding sequence number after the second data frame with the corresponding sequence number arrives again.

If a currently received data frame is a second data frame, and an arrival status that is in the block acknowledgment scoreboard and that corresponds to the second data frame is that the second data frame has arrived, a discarding operation can be performed on the second data frame. The block acknowledgment frame scoreboard can record, as arrived, both arrival statuses of a data frame that has arrived at the receive end and has been delivered and a data frame that has arrived at the receive end and is buffered at the receive end. The arrival status of the data frame is recorded, so that when the second data frame is received, the block acknowledgment frame scoreboard can be queried based on the sequence number corresponding to the second data frame, to determine that the second data frame is a data frame that has arrived, and the second data frame is no longer repeatedly delivered, and is discarded.

Optionally, performing the delivery operation on at least one data frame includes performing the delivery operation based on in-order delivery and performing the delivery operation based on out-of-order delivery. When the delivery operation is performed on a plurality of data frames, delivery of both a data frame for in-order delivery and a data frame for out-of-order delivery is further included.

In a possible implementation, for the first data frame recorded as not yet arrived in the block acknowledgment scoreboard, performing the delivery operation on the first data frame with the corresponding sequence number after the first data frame with the corresponding sequence number arrives includes: after the first data frame with the corresponding sequence number is received, determining that the first data frame is a data frame for in-order delivery, and buffering the first data frame in a reordering buffer queue; and after an initial data frame for in-order delivery is buffered in the reordering buffer queue, delivering the first data frame and the initial data frame together.

Data frames for in-order delivery need to be delivered in an order of sequence numbers, for example, in ascending order of the sequence numbers. Therefore, to prevent the delivery order from failing to meet a requirement of in-order delivery, after arriving at the receive end, each data frame for in-order delivery can be correspondingly buffered in the reordering buffer queue based on the sequence number of the data frame. If the first data frame is a data frame that is for in-order delivery and that arrives for the first time, the first data frame is buffered in the reordering buffer queue. A window occupied by a sequence number corresponding to a data frame that has been delivered due to out-of-order delivery may exist between a queue head of the reordering buffer queue and a window in which the first data frame is to be buffered. The window is empty. According to the method provided in this application, if the initial data frame is buffered at the queue head, the first data frame is delivered instead of waiting for expiration of time for forced delivery due to existence of the empty window. Instead, the first data frame and the initial data frame are delivered together after the initial data frame for in-order delivery is buffered in the reordering buffer queue. This is because it can be determined, based on the block acknowledgment scoreboard, that the data frame corresponding to the empty window between the queue head of the reordering buffer queue and the window in which the first data frame is to be buffered has arrived. Therefore, it is considered that the initial data frame to the first data frame are data frames that are consecutive and completely received, and can be delivered together based on the requirement of in-order delivery.

Optionally, delivering together includes delivering the initial data frame to the first data frame one by one or delivering the initial data frame to the first data frame at the same time.

In a possible implementation, for the first data frame recorded as not yet arrived in the block acknowledgment scoreboard, performing the delivery operation on the first data frame with the corresponding sequence number after the first data frame with the corresponding sequence number arrives includes: after the first data frame with the corresponding sequence number is received, determining that the first data frame is a data frame for in-order delivery, and buffering the first data frame in a reordering buffer queue; and after each data frame with a sequence number smaller than that of the first data frame, including an initial data frame, is buffered in the reordering buffer queue, delivering the first data frame and a previous data frame together, where the data frame includes the initial data frame and each data frame whose corresponding sequence number is smaller than that of the first data frame.

For example, when another data frame, for example, a third data frame, for in-order delivery is further included between the initial data frame and the first data frame in the reordering buffer queue, a sequence number of the third data frame is smaller than the sequence number of the first data frame, the initial data frame is buffered at a queue head, and the receive end starts to check from the queue head of the reordering buffer queue in combination with the block acknowledgment scoreboard, and determines that an empty window corresponding to a delivered data frame for out-of-order delivery and a window in which the third data frame is to be buffered are included between the initial data frame and the first data frame in the reordering buffer queue, and the data frame for out-of-order delivery has arrived, it is considered that one or more consecutive data frames exist from the queue head, and the initial data frame, the third data frame, and the first data frame are delivered together.

In a possible implementation, after the first data frame and the initial data frame are delivered together, the reordering buffer queue is refreshed.

That the first data frame and the initial data frame are delivered together includes that the first data frame and the initial data frame are delivered together, and the initial data frame, the first data frame, and each data frame whose corresponding sequence number is smaller than that of the first data frame are delivered together. After delivery, the reordering buffer queue is refreshed, and a window is slid. In this way, the reordering buffer queue can be updated in time, to provide more accurate data support for determining whether the data frame has arrived.

In a possible implementation, for the first data frame recorded as not yet arrived in the block acknowledgment scoreboard, performing the delivery operation on the first data frame with the corresponding sequence number after the first data frame with the corresponding sequence number arrives includes: after the first data frame with the corresponding sequence number is received, determining that the first data frame is the initial data frame for in-order delivery; and delivering the initial data frame, and refreshing the reordering buffer queue.

If the received first data frame is the initial data frame for in-order delivery, the first data frame may not be buffered in the reordering buffer queue, but is immediately delivered, and the reordering buffer queue is refreshed. A window of the reordering buffer queue is slid, a port for a next data frame that is after the initial data frame and that is for in-order delivery is slid to the queue head, and then the delivery operation is performed based on in-order delivery. In this way, a step of buffering the initial data frame in the reordering buffer queue and then delivering the initial data frame can be simplified, to reduce a delay of in-order delivery.

In a possible implementation, for the first data frame recorded as not yet arrived in the block acknowledgment scoreboard, performing the delivery operation on the first data frame with the corresponding sequence number after the first data frame with the corresponding sequence number arrives includes: after the first data frame with the corresponding sequence number is received, determining that the first data frame is a data frame for out-of-order delivery, and immediately delivering the first data frame.

In a possible implementation, the method further includes: after the first data frame is successfully delivered, updating, to arrived, the arrival status that is in the block acknowledgment scoreboard and that corresponds to the first data frame.

The first data frame may be a data frame for in-order delivery or a data frame for out-of-order delivery. After the first data frame is successfully delivered, the arrival status of the first data frame is updated to arrived, so that when the first data frame is subsequently resent erroneously and is successfully received, the first data frame that repeatedly arrives can be discarded, thereby avoiding repeated delivery of the first data frame.

According to a second aspect, this application provides a data frame delivery method, including: determining, based on a buffer status of a window that is in a reordering buffer queue and that is of a data frame corresponding to a sequence number and a delivery status that is of the data frame corresponding to the sequence number and that is recorded in a delivery scoreboard, whether each data frame in at least one data frame with a sequence number has arrived; and for a first data frame determined as not yet arrived based on the delivery scoreboard and the reordering buffer queue, performing a delivery operation on the first data frame with a corresponding sequence number after the first data frame with the corresponding sequence number arrives.

Optionally, the data frame delivery method is performed by a data frame delivery apparatus. The apparatus is deployed in a receive end, and is referred to as a receive end for short below.

The receive end includes a delivery scoreboard used to record delivery statuses of data frames with different sequence numbers and a reordering buffer queue used to buffer data frames that are for in-order delivery and that correspond to sequence numbers. A first data frame is received, and the first data frame carries a sequence number. The receive end can query the delivery scoreboard corresponding to the sequence number, to obtain a delivery status of the first data frame; and query a window that is of the reordering buffer queue and that corresponds to the sequence number, and determine a buffer status of the first data frame based on whether the window is empty, that is, whether the first data frame is buffered.

The delivery method provided in this application can determine, by querying both the delivery scoreboard and the reordering buffer queue, whether a data frame has arrived. A determining method includes: If a delivery status that is of a scoreboard window corresponding to the sequence number of the first data frame and that is in the delivery scoreboard is that the first data frame is not delivered, and a window corresponding to the sequence number of the first data frame in the reordering buffer queue is empty, that is, the first data frame is not buffered, it may be determined that the first data frame has not arrived. Otherwise, it is determined that the first data frame has arrived. If a currently received first data frame has not arrived, the delivery operation can be performed on the first data frame. This method for determining, based on whether the data frame has arrived, whether to perform the delivery operation can determine that each delivered data frame is a data frame that arrives for the first time, and can effectively avoid repeated delivery. In addition, the delivery method determines, based on both the delivery scoreboard and the reordering buffer queue, whether the data frame has arrived. In other words, the determining of data frame delivery is updated from based on a buffer status in the reordering buffer queue to based on the delivery method and both the delivery scoreboard and the reordering buffer queue. The delivery method leads to very small basic changes in modifying the determining of the delivery operation, is easier to implement, and has lower implementation costs.

In a possible implementation, the method further includes: for a second data frame determined as arrived based on the delivery scoreboard and the reordering buffer queue, discarding the second data frame with a corresponding sequence number after the second data frame with the corresponding sequence number arrives again.

In a possible implementation, for the first data frame determined as not yet arrived based on the delivery scoreboard and the reordering buffer queue, performing the delivery operation on the first data frame with the corresponding sequence number after the first data frame with the corresponding sequence number arrives includes: after the first data frame with the corresponding sequence number is received, determining that the first data frame is a data frame for in-order delivery, and buffering the first data frame in the reordering buffer queue; and after an initial data frame for in-order delivery is buffered in the reordering buffer queue, delivering the first data frame and the initial data frame together.

In a possible implementation, for the first data frame determined as not yet arrived based on the delivery scoreboard and the reordering buffer queue, performing the delivery operation on the first data frame with the corresponding sequence number after the first data frame with the corresponding sequence number arrives includes: after the first data frame with the corresponding sequence number is received, determining that the first data frame is a data frame for in-order delivery, and buffering the first data frame in the reordering buffer queue; if at least one data frame whose corresponding sequence number is smaller than that of the first data frame is delivered, refreshing the reordering buffer queue, and updating, to delivered, a delivery status that is in the delivery scoreboard and that corresponds to the at least one data frame; and after each data frame for in-order delivery with a sequence number smaller than that of the first data frame, including an initial data frame, is buffered in the reordering buffer queue, delivering the first data frame and a previous data frame together, where the previous data frame includes the initial data frame and each data frame that is for in-order delivery and whose corresponding sequence number is smaller than that of the first data frame.

In a possible implementation, after the first data frame and the initial data frame are delivered together, the reordering buffer queue and the delivery scoreboard are refreshed.

In a possible implementation, for the first data frame determined as not yet arrived based on the delivery scoreboard and the reordering buffer queue, performing the delivery operation on the first data frame with the corresponding sequence number after the first data frame with the corresponding sequence number arrives includes: after the first data frame with the corresponding sequence number is received, determining that the first data frame is the initial data frame for in-order delivery; and delivering the initial data frame, and refreshing the reordering buffer queue and the delivery scoreboard.

In a possible implementation, for the first data frame determined as not yet arrived based on the delivery scoreboard and the reordering buffer queue, performing the delivery operation on the first data frame with the corresponding sequence number after the first data frame with the corresponding sequence number arrives includes: after the first data frame with the corresponding sequence number is received, determining that the first data frame is a data frame for out-of-order delivery, and immediately delivering the first data frame.

In a possible implementation, the method further includes: after the first data frame is successfully delivered, updating, to delivered, a delivery status that is in the delivery scoreboard and that corresponds to the first data frame, and updating, to empty, a buffer status corresponding to the first data frame in the reordering buffer queue.

It should be understood that the technical solutions in the second aspect of this application correspond to the technical solutions in the first aspect of this application, and beneficial effect achieved by the aspects and the corresponding feasible implementations are similar. Details are not described herein again.

According to a third aspect, this application provides a first apparatus, including at least one control module. The at least one control module includes a block acknowledgment scoreboard control module and a reordering buffer queue control module that are coupled to each other, and implements the method according to the first aspect.

According to a fourth aspect, this application provides a second apparatus, including at least one control module. The at least one control module includes a block acknowledgment scoreboard control module and a reordering buffer queue control module that are coupled to each other, and implements the method according to the first aspect.

According to a fifth aspect, this application provides a communication apparatus. The communication apparatus includes a processor and a storage medium. The storage medium stores instructions. When the instructions are run by the processor, the processor is configured to perform the method according to any one of the foregoing aspects and operations in any possible implementation of any one of the foregoing aspects.

According to a sixth aspect, this application provides a computer-readable storage medium. The computer-readable storage medium stores a computer program. When the computer program is executed by a processor, the method according to any one of the foregoing aspects and a part or all of operations included in any possible implementation of any one of the foregoing aspects are implemented.

According to a seventh aspect, this application provides a computer program product. The computer program product includes instructions. When the instructions are run on a processor, the method according to any one of the foregoing aspects and a part or all of operations included in any possible implementation of any one of the foregoing aspects are implemented.

According to an eighth aspect, this application provides a chip, including a port circuit and a processor. The port circuit is connected to the processor. The processor is configured to enable the chip to perform the method according to any one of the foregoing aspects and a part or all of operations included in any possible implementation of any one of the foregoing aspects.

It should be understood that the technical solutions in the third aspect to the eighth aspect of this application are consistent with or correspond to the technical solutions in the first aspect or the second aspect of this application, and beneficial effect achieved by the aspects and the corresponding feasible implementations are similar. Details are not described herein again.

### BRIEF DESCRIPTION OF DRAWINGS

To describe technical solutions in embodiments of this application more clearly, the following briefly describes accompanying drawings for describing embodiments of this application. It is clear that the accompanying drawings in the following descriptions show only some embodiments of this application, and persons of ordinary skill in the art may still derive other drawings from these accompanying drawings without creative efforts.
FIG. 1 is a diagram of buffering an MPDU in a reordering buffer queue according to an embodiment of this application;
FIG. 2 is a schematic flowchart of a data frame delivery method according to an embodiment of this application;
FIG. 3 is a schematic flowchart of another data frame delivery method according to an embodiment of this application;
FIG. 4 is a diagram 1 of an MPDU delivery procedure according to an embodiment of this application;
FIG. 5 is a diagram 1 of an MPDU delivery scenario according to an embodiment of this application;
FIG. 6 is a diagram 2 of an MPDU delivery procedure according to an embodiment of this application;
FIG. 7 is a diagram 2 of an MPDU delivery scenario according to an embodiment of this application;
FIG. 8 is a schematic flowchart of another data frame delivery method according to an embodiment of this application;
FIG. 9 is a diagram of a structure of a delivery scoreboard according to an embodiment of this application;
FIG. 10 is a diagram 3 of an MPDU delivery procedure according to an embodiment of this application;
FIG. 11 is a diagram 3 of an MPDU delivery scenario according to an embodiment of this application;
FIG. 12 is a diagram 1 of a structure of a first apparatus according to an embodiment of this application;
FIG. 13 is a diagram 2 of a structure of a first apparatus according to an embodiment of this application;
FIG. 14 is a diagram 3 of a structure of a first apparatus according to an embodiment of this application;
FIG. 15 is a diagram 1 of a structure of a second apparatus according to an embodiment of this application;
FIG. 16 is a diagram 2 of a structure of a second apparatus according to an embodiment of this application;
FIG. 17 is a diagram of a structure of a data frame delivery system according to an embodiment of this application;
FIG. 18 is a diagram of a structure of a device 60 according to an embodiment of this application;
FIG. 19 is a diagram of a structure of a communication apparatus 70 according to an embodiment of this application; and
FIG. 20 is a diagram of a structure of a device 80 according to an embodiment of this application.

### DESCRIPTION OF EMBODIMENTS

To make persons skilled in the art understand solutions in this application better, the following clearly and fully describes technical solutions in embodiments of this application with reference to accompanying drawings in embodiments of this application. It is clear that the described embodiments are merely some rather than all of embodiments of this application.

The term "and/or" in this specification describes only an association relationship between associated objects, and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are intended to distinguish between different target objects, but do not indicate a particular order of the target objects.

In embodiments of this application, a term like "example" or "for example" is used to represent giving an example, an illustration, or a description. Any embodiment or design scheme described as an "example" or "for example" in embodiments of this application should not be construed as being more preferred or having more advantages than another embodiment or design scheme. Exactly, use of the term like "example" or "for example" is intended to present a related concept in a specific manner.

In descriptions of embodiments of this application, unless otherwise stated, "a plurality of" means two or more. For example, a plurality of processing units mean two or more processing units, and a plurality of systems mean two or more systems.

For ease of understanding, the following first explains and describes related nouns or terms used in embodiments of this application.

### 1. In-order delivery

In-order delivery includes an in-order delivery mechanism at a MAC layer in an 802.11 standard, including: A transmit end allocates ascending sequence numbers (Sequence Numbers, SNs) to sent MPDUs one by one, and in-order delivery requires that a receive end deliver the MDPUs to an LLC layer in ascending order of the SNs.

### 2. Reordering buffer (Reordering Buffer) queue

At least one received MPDU is buffered in the reordering buffer queue, and consecutive and completely received MPDUs are delivered to an LLC layer only when all MPDUs from a queue head of the reordering buffer queue are completely received. To be specific, a receive end starts to check, from the queue head of the reordering buffer queue, whether one or more consecutive MPDUs are completely received, and if the one or more MPDUs are completely received, delivers the one or more MPDUs to the LLC layer until a 1^{st} location at which a buffer is empty appears.

### 3. Out-of-order delivery (Out-of-Order Delivery)

Out-of-order delivery includes that a receive end immediately delivers an MPDU to an LLC layer after receiving the MPDU.

During data frame delivery, two cases are generally included. One case is that a data frame needs to be immediately delivered after being received, which may be referred to as out-of-order delivery. The other case is that data frames need to be delivered in ascending order of SNs, which may be referred to as in-order delivery.

In embodiments of this application, a data frame delivery method is described by using an example in which a data frame, such as an MPDU, needs to be delivered from a MAC layer to an LLC layer. When a data frame of another layer is delivered, with reference to examples in embodiments of this application, whether the data frame needs to be delivered or discarded may be determined based on whether the data frame has arrived at a data frame delivery apparatus disposed at a receive end (referred to as a receive end for short below). For different data frames, details are not described again. In an actual application scenario, an apparatus disposed at a transmit end (referred to as a transmit end for short below) may send, to the receive end based on different services, a service flow including at least one MPDU, where each MPDU may carry an SN that identifies a different MPDU. In embodiments of this application, an example in which the transmit end allocates ascending SNs to MPDUs one by one in a service generation order is used for description. For another SN order, refer to the examples in embodiments of this application. In some examples, the SN may be carried in a packet header of the MPDU.

For example, in a MAC layer delivery scenario, at the transmit end, two service flows need to be delivered from the MAC layer to the LLC layer, and are respectively denoted as a service flow A and a service flow B. The service flow A needs in-order delivery by the receive end, and the service flow B needs to be delivered by the receive end based on an out-of-order delivery mechanism. In this case, there are three cases for a plurality of MPDUs that are sent by the transmit end to the receive end and that are received by the receive end, to transmit and deliver services of the two service flows. One case is that all the MPDUs are MPDUs of the service flow A that are for in-order delivery. Another case is that all the MPDUs are MPDUs of the service flow B that are for out-of-order delivery. Another case is that the MPDUs are an MPDU for in-order delivery and an MPDU for out-of-order delivery.

The following separately provides examples for the three cases, to describe how problems such as repeated delivery and abnormal delivery cause problems such as high delivery overheads and a high delivery delay when the MPDUs are delivered.

In a possible implementation scenario, the transmit end sends the service flow B to the receive end, where the service flow B is carried in at least one MPDU. When arriving at the receive end, the MPDU of the service flow B may be delivered to the LLC layer. However, because there is no duplicate check mechanism for the MPDU for out-of-order delivery, once an MPDU is repeatedly sent erroneously, the MPDU is repeatedly delivered. For example, the service flow B sent by the transmit end is carried in five MPDUs, and SNs of the five MPDUs are respectively identified as 1, 2, 3, 4, and 5 (in the following, an identifier of the SN being 1 is simply denoted as SN=1, an identifier of the SN being 2 is simply denoted as SN=2, and the rest may be deduced by analogy). After the MPDUs of the service flow B are delivered, due to a reason like that the transmit end does not receive a block acknowledgment frame, the transmit end erroneously considers that the five MPDUs fail to be sent, and therefore sends the five MPDUs again. The receive end receives the MPDUs whose SN identifiers are SN=1, SN=2, SN=3, SN=4, and SN=5 again, and delivers the MPDUs to the LLC layer again, resulting in repeated delivery.

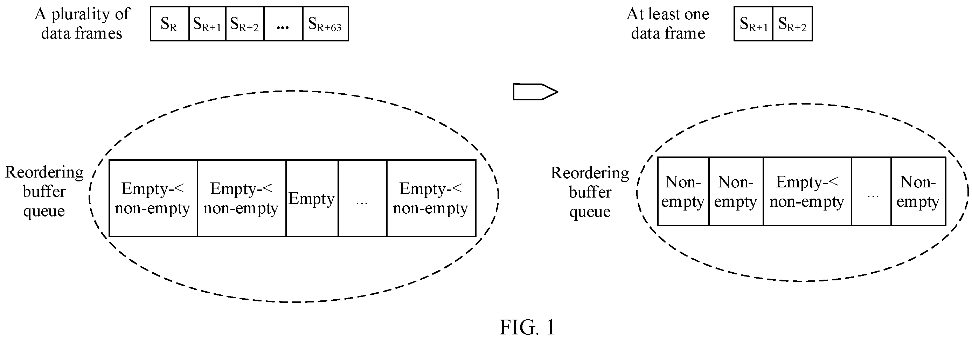

In a possible implementation scenario, the transmit end sends the service flow A to the receive end, where the service flow A is carried in a plurality of MPDUs. The transmit end allocates ascending SNs to the sent MPDUs one by one. Because the service flow A needs in-order delivery, after receiving at least one MPDU, the receive end needs to deliver the plurality of MDPUs to the LLC layer in ascending order of the SNs. Because cases such as packet loss and retransmission are caused due to indeterminacy of a radio link, an order in which the plurality of MPDUs arrive at the receive end may be different from the ascending order of the SNs. Therefore, the receive end maintains a buffer queue, for example, a reordering buffer (Reordering Buffer) queue, to buffer an arrived MPDU, and waits for consecutive MPDUs, starting from a 1^{st} MPDU, for delivery. In other words, the receive end delivers the consecutive and completely received MPDUs to the LLC layer only after completely receiving the MPDUs starting from a queue head of the reordering buffer queue. That the MPDUs starting from the queue head of the reordering buffer queue are completely received includes: It is determined whether one or more consecutive MPDUs are buffered at locations that are in the reordering buffer queue and that correspond to the one or more consecutive MPDUs; and if the one or more MPDUs are all at the locations, the one or more MPDUs are delivered to the LLC layer until a 1^{st} location at which a buffer is empty appears. Refer to FIG. 1. A scenario in which a plurality of MPDUs need to be delivered based on in-order delivery is described. FIG. 1 is a diagram of buffering an MPDU in the reordering buffer queue according to an embodiment of this application. As shown in FIG. 1, it is assumed that the transmit end sends 64 MPDUs, to carry the service of the service flow A. During sending, SNs identifiers being SR, SR+1, and SR+2 to SR+63 are respectively allocated to the MPDUs in a sending order. After arriving at the receive end, the plurality of MPDUs are first buffered in the reordering buffer queue. A buffering order is as follows: From a queue head of the reordering buffer queue, an MPDU whose SN identifier is SR is correspondingly buffered in a 1^{st} window (which may be denoted as a window 1), an MPDU whose SN identifier is SR+1 is correspondingly buffered in a 2^{nd} window (which may be denoted as a window 2), and the rest may be deduced by analogy. The receive end may perform delivery to the LLC layer from the MPDU buffered in the window 1 in the reordering buffer queue. Generally, the receive end may deliver one or more consecutive MPDUs to the LLC layer from the MPDU buffered in the window 1 in the reordering buffer queue, for example, in this example, may deliver the MPDU buffered in the window 2 after delivering the MPDU buffered in the window 1, and the rest may be deduced by analogy. In another possibility, the receive end may alternatively wait until the MPDUs with SR, SR+1, and SR+2 to SR+63 are completely received, and then deliver the MPDUs in order. In this embodiment of this application, continuous delivery in the first manner is used as an example for description.

If packet loss occurs during transmission, for example, the MPDU whose SN identifier is SR+2 is lost, in the reordering buffer queue of the receive end, a 3^{rd} window (which may be denoted as a window 3) in which the MPDU with SR+2 needs to be correspondingly buffered is empty. Based on a requirement that is of in-order delivery and that is of performing delivery in ascending order of SNs, the receive end may determine, from the 1^{st} window at the queue head of the reordering buffer queue, that windows corresponding to the MPDUs whose SNs are respectively identified as SR and SR+1 are non-empty and a window corresponding to the MPDU whose identifier is SR+2 is empty. Therefore, the receive end performs delivery to the LLC layer from the MPDU buffered in the window 1 in the reordering buffer queue, stops delivery after delivering the MPDU buffered in the window 2 because a 1^{st} window in which a buffer is empty appears, slides a window of the reordering buffer queue, that is, forward moves the original window 3 by two locations to the 1^{st} window and forward moves an original 4^{th} window (which may be denoted as a window 4) by two locations to the 2^{nd} window, and also forward moves another following window similarly. After delivery, a window is slid to the queue head of the reordering buffer queue, and is empty. Delivery continues after a 1^{st} MPDU to be buffered in the queue head is buffered. In some examples, after an empty window (for example, the original window 3 corresponding to the MPDU with SR+2 in this example) appears during delivery, a timer may be started, for example, the timer is set to 20 milliseconds to 100 milliseconds. If no MPDU is buffered in the empty window when the timer expires, a window of the reordering buffer queue continues to be slid, to slide a next non-empty window to the queue head and start delivery. For example, if the MPDU with SR+2 is still not received when the timer expires, with reference to the example in FIG. 1, the next non-empty MPDU, namely, an original window 4, is slid to the 1^{st} window of the reordering buffer queue as the queue head to start delivery. If the transmit end successfully receives the MPDU with SR+2 before the timer expires, the receive end queries for a buffer status of the reordering buffer queue. Because the window corresponding to the MPDU with SR+2 has been slid to the 1^{st} window and is empty, the MPDU with SR+2 is buffered at the queue head of the reordering buffer queue, and delivery to the LLC layer continues from the queue head with reference to the foregoing in-order delivery example. A possibility of repeated delivery can be reduced to some extent based on the reordering buffer queue. For example, when an MPDU needs to be resent, if the transmit end resends, during resending, the MPDU whose SN identifier is SR+2 and the MPDU whose SN identifier is SR+63, the receive end queries for the buffer status of the reordering buffer queue, may determine that a location that is in the reordering buffer queue and that corresponds to the MPDU whose SN identifier is SR+63 is non-empty, and therefore, discards the re-received MPDU with SR+63. This avoids repeated delivery. However, if the MPDUs carrying the service flow A are all delivered, and the transmit end resends the 64 same MPDUs due to some error reasons, when the receive end queries the reordering buffer queue, a buffer status of each window is empty. In this case, the receive end may still deliver the MPDUs repeatedly, and a problem of repeated delivery still exists.

In a possible implementation scenario, the transmit end sends, to the receive end, the MPDUs carrying the service flow A and the service flow B, that is, an MPDU of the service flow A and an MPDU of the service flow B are sent in a mixed manner. In this scenario, if it is required that the MPDU of the service flow B is also delivered to the LLC layer based on in-order delivery, an unnecessary delay is increased. Therefore, when receiving the MPDUs, the receive end delivers the MPDU of the service flow A based on a requirement of in-order delivery, and delivers the MPDU of the service flow B in a manner of immediate delivery after arrival. Because there is a service for in-order delivery, the receive end maintains a reordering buffer queue, and each window in the reordering buffer queue corresponds to one received MPDU. In other words, the MPDU of the service flow B also corresponds to one window in the reordering buffer queue. In addition, because the MPDU of the service flow B is immediately delivered after arriving at the receive end, after delivery, a buffer status of the window that is in the reordering buffer queue and that corresponds to the MPDU of the service flow B is empty. With reference to the requirement of in-order delivery described in the foregoing example, when the window in the reordering buffer queue is empty, the MPDU that is of the service flow A and that needs in-order delivery may not be normally delivered.

For example, the transmit end and the receive end pre-agree on an SN of a 1^{st} MPDU in a plurality of MPDUs that need to be transmitted, for example, pre-agree that the SN of the 1^{st} MPDU is SN=1. It is assumed that the transmit end sends five MPDUs, namely, MPDUs whose SNs are respectively SN=1, SN=2, SN=3, SN=4, and SN=5, where the MPDUs with SN=1, SN=4, and SN=5 are MPDUs of the service flow A and need in-order delivery, and the MPDUs with SN=2 and SN=3 are MPDUs of the service flow B and are for out-of-order delivery. This sending is recorded as first sending. An error occurs in transmission of the MPDU with SN=1, and the receive end does not receive the MPDU with SN=1, but successfully receives all other MPDUs. Because the receive end does not receive any MPDU before first sending by the transmit end, all buffer statuses of windows that are in a reordering buffer queue of the receive end and that correspond to the MPDUs are empty. After the receive end receives the data frames sent for the first time, because each window in the reordering buffer queue corresponds to an MPDU with an SN, the windows of the reordering buffer queue are respectively denoted as a window 1, a window 2, a window 3, a window 4, a window 5, and the like from a queue head. The window 1 corresponds to the MPDU with SN=1, the window 2 corresponds to the MPDU with SN=2, and so on. The receive end may identify the correctly received MPDUs with SN=2, SN=3, SN=4, and SN=5. For example, the receive end determines, based on a flag bit that is in a packet header of each MPDU and that is pre-agreed on by the transmit end and the receive end, that the MPDU is for in-order delivery or out-of-order delivery, buffers MPDUs for in-order delivery, for example, the MPDUs with SN=4 and SN=5 in this example, in the reordering buffer queue, and delivers MPDUs for out-of-order delivery, for example, the MPDUs with SN=2 and SN=3 in this example, to the LLC layer. After the MPDUs with SN=2 and SN=3 are delivered, the reordering buffer queue is refreshed. The window 1 is empty, the window 2 and the window 3 are empty, and the window 4 and the window 5 are non-empty. Because the MPDU with SN=1 is not received, the receive end generates a block acknowledgment frame, to indicate the transmit end to resend the MPDU with SN=1. The transmit end sends the MPDU with SN=1 for the second time based on the indication of the block acknowledgment frame, and sending succeeds. The receive end correctly receives the MPDU with SN=1, and buffers the MPDU with SN=1 in a corresponding location in the reordering buffer queue, namely, a location of the window 1. The receive end determines again whether there are consecutive and completely arriving MPDUs, that can be delivered, in the reordering buffer queue from the queue head. For example, after the MPDU with SN=1 is buffered in the window 1, the window 1 is non-empty and is at the queue head, and the MPDU with SN=1 may be delivered, but the MPDUs with SN=4 and SN=5 are blocked from being normally delivered because the MPDUs with SN=2 and SN=3 whose sequence numbers are smaller than those of the MPDU with SN=4 buffered in the window 4 and the MPDU with SN=5 buffered in the window 5 have been delivered and the window 2 and the window 3 in the reordering buffer queue are empty. The MPDUs with SN=4 and SN=5 can be forcibly delivered only after a timer expires. Consequently, a delivery delay is high.

To resolve the foregoing problems, embodiments of this application provide a data frame delivery method, to perform delivery based on whether an MPDU arrives at a receive end, so that a problem of repeated delivery of an MPDU can be effectively resolved, and a problem that an MPDU for in-order delivery is blocked and cannot be normally delivered can be further resolved, thereby reducing a delay of in-order delivery.

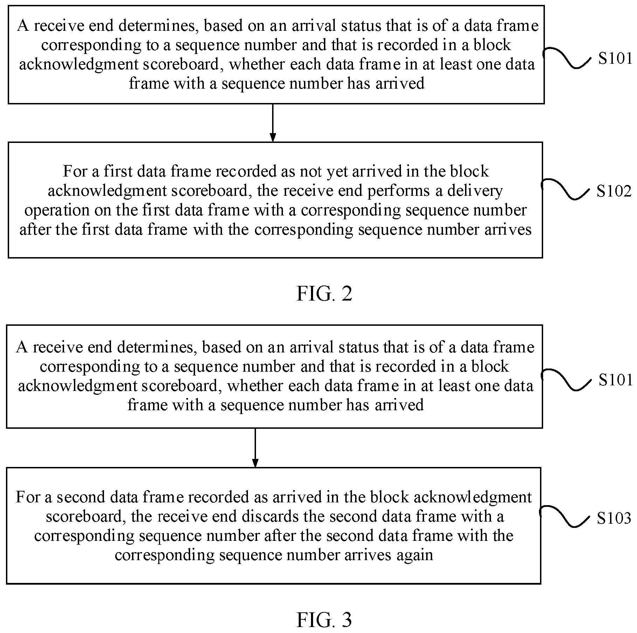

FIG. 2 is a schematic flowchart of a data frame delivery method according to an embodiment of this application. As shown in FIG. 2, the method may be performed by a receive end, and the method includes S101 and S102.

S101: The receive end determines, based on an arrival status that is of a data frame corresponding to a sequence number and that is recorded in a block acknowledgment scoreboard, whether each data frame in at least one data frame with a sequence number has arrived.

Refer to the foregoing example. A transmit end allocates an SN to each MPDU, for example, may include, one by one in ascending order, SNs in packet headers of MPDUs generated in a service order. In the following examples, an example in which the receive end and the transmit end pre-agree to transmit a plurality of MPDUs starting from SN=1, and the transmit end sends MPDUs whose SNs are respectively SN=1, SN=2, SN=3, SN=4, and SN=5.

The receive end maintains the block acknowledgment scoreboard. The block acknowledgment scoreboard includes a plurality of windows. Each window may correspondingly record an arrival status of one MPDU, to determine whether an MPDU corresponding to each SN has arrived. For example, the plurality of windows of the block acknowledgment scoreboard include a 1^{st} window (which may be denoted as a scoreboard window 1 to distinguish from a window of a reordering buffer queue), and a 2^{nd} window (which may be denoted as a scoreboard window 2) to a 64^{th} window (which may be denoted as a scoreboard window 64). The scoreboard window 1 may be used to record an arrival status of the MPDU with SN=1, the scoreboard window 2 may be used to record an arrival status of the MPDU with SN=2, and other scoreboard windows may be deduced by analogy.

Optionally, different values in the scoreboard window of the block acknowledgment scoreboard may indicate the arrival status of the MPDU. For example, a value in the scoreboard window being 1 indicates that the MPDU has arrived, and the value in the scoreboard window being 0 indicates that the MPDU has not arrived. The value is merely an example. Alternatively, the value being 0 may indicate that the MPDU has arrived, and the value being 1 may indicate that the MPDU has not arrived. Alternatively, values with different bits, for example, 00, 01, and 000 may indicate the arrival status of the MPDU, or the like. In this embodiment of this application, an example in which the value in the scoreboard window being 1 indicates that the MPDU has arrived and the value in the scoreboard window being 0 indicates that the MPDU has not arrived is used for description. In an actual application scenario, the value is set based on a requirement, and is not limited to the examples in this embodiment of this application.

The receive end determines, as an MPDU that has arrived, an MPDU that has arrived at the receive end, and correspondingly refreshes the block acknowledgment scoreboard. Generally, a value in each scoreboard window of the block acknowledgment scoreboard is an initial value. In this example, the initial value is 0. When an MPDU arrives at the receive end, in the refreshed block acknowledgment scoreboard, the value in a scoreboard window corresponding to an SN of the MPDU is updated to 1. In other words, after an MPDU arrives at the receive end, regardless of whether the MPDU is delivered or buffered in the reordering buffer queue, the receive end considers the MPDU as an MPDU that has arrived, and updates the value in a scoreboard window that is in the block acknowledgment scoreboard and that corresponds to an SN of the MPDU, to record an arrival status of the MPDU. For example, it is assumed that, in the MPDUs with SN=1, SN=2, SN=3, SN=4, and SN=5 sent by the transmit end, the MPDU with SN=1 is lost, the MPDUs with SN=2, SN=3, SN=4, and SN=5 successfully arrive, the MPDUs with SN=2 and SN=3 have been delivered, and the MPDUs with SN=4 and SN=5 are buffered in the reordering buffer queue. The receive end may refresh the block acknowledgment scoreboard after delivering the MPDUs with SN=2 and SN=3. The values in the plurality of scoreboard windows of the block acknowledgment scoreboard are updated from initial 0 to the value that is in the scoreboard window 1 corresponding to the MPDU with SN=1 and that is 0, the value that is in the scoreboard window 2 corresponding to the MPDU with SN=2 and that is 1, the value that is in the scoreboard window 3 corresponding to the MPDU with SN=3 and that is 1, the value that is in the scoreboard window 4 corresponding to the MPDU with SN=4 and that is 1, and the value that is in the scoreboard window 5 corresponding to the MPDU with SN=5 and that is 1. It indicates that the MPDU with SN=1 has not arrived, and the MPDUs with SN=2, SN=3, SN=4, and SN=5 have arrived.

S102: For a first data frame recorded as not yet arrived in the block acknowledgment scoreboard, the receive end performs a delivery operation on the first data frame with a corresponding sequence number after the first data frame with the corresponding sequence number arrives.

For example, if the first data frame is the MPDU with SN=1, and the receive end determines, based on the block acknowledgment scoreboard, that the MPDU with SN=1 has not arrived, the transmit end sends the MPDU with SN=1 again, and performs the delivery operation on the MPDU. If the MPDU with SN=1 needs to be delivered based on an in-order service, the receive end may first buffer the MPDU with SN=1 in the reordering buffer queue, and perform delivery based on an SN requirement of in-order delivery, for example, in ascending order of SNs. SN=1 is smallest, and corresponds to a window at a queue head of the reordering buffer queue. Therefore, the receive end may first deliver the MPDU that is in the window corresponding to SN=1 and that is buffered in the reordering buffer queue, and then perform delivery, or immediately deliver the MPDU and then refresh the reordering buffer queue. If the MPDU with SN=1 needs to be delivered based on an out-of-order service, the receive end may immediately deliver the MPDU to an LLC layer.

Optionally, after the delivery operation is performed on all the MPDUs with SN=1, SN=2, SN=3, SN=4, and SN=5, the receive end may refresh the block acknowledgment scoreboard again. To be specific, the block acknowledgment scoreboard is refreshed, and accordingly, the value in the scoreboard window 1 corresponding to the MPDU with SN=1 is 1, the value in the scoreboard window 2 corresponding to the MPDU with SN=2 is 1, the value in the scoreboard window 3 corresponding to the MPDU with SN=3 is 1, the value in the scoreboard window 4 corresponding to the MPDU with SN=4 is 1, and the value in the scoreboard window 5 corresponding to the MPDU with SN=5 is 1. It indicates that the MPDUs with SN=1, SN=2, SN=3, SN=4, and SN=5 have all arrived.

The first data frame may be for in-order delivery, or may be for out-of-order delivery. The transmit end and the receive end may pre-agree on a method for identifying a delivery requirement of the first data frame. For example, the first data frame may carry indication information, indicating that the first data frame is for in-order delivery or out-of-order delivery; or a field is carried in the first data frame according to a pre-agreement, where the field may identify that the first data frame is for in-order delivery or out-of-order delivery, for example, the field may be an agreed-on field in a packet header. The receive end performs the delivery operation based on the identified delivery requirement of the first data frame. As long as the receive end can first determine, by querying the block acknowledgment scoreboard, that the first data frame is a data frame that has not arrived, and then perform the delivery operation on the first data frame, a possibility that the first data frame is repeatedly delivered can be effectively avoided, to reduce delivery overheads.

FIG. 3 is a schematic flowchart of another data frame delivery method according to an embodiment of this application. As shown in FIG. 3, the method may be performed by a receive end, and a difference between the method and the method in FIG. 2 is that S103 is further included after S101.

S103: For a second data frame recorded as arrived in the block acknowledgment scoreboard, the receive end discards the second data frame with a corresponding sequence number after the second data frame with the corresponding sequence number arrives again.

For example, if the second data frame is any one of the MPDUs with SN=2, SN=3, SN=4, and SN=5, the receive end determines, based on the arrival status recorded in the block acknowledgment scoreboard, that the second data frame has arrived, and discards the second data frame when the second data frame is successfully received again. For example, the second data frame is the MPDU with SN=2. The transmit end resends the MPDU with SN=2 due to some error reasons. The receive end receives the MPDU with SN=2, determines, based on the block acknowledgment scoreboard, that an arrival status of the MPDU with SN=2 is that the MPDU has arrived, and discards the MPDU with SN=2 received for the second time.

The second data frame may be for in-order delivery, or may be for out-of-order delivery. When receiving the second data frame, the receive end determines that the arrival status of the second data frame is that the second data frame has arrived, and discards the second data frame. In this way, a possibility that the second data frame is repeatedly delivered can be effectively avoided, to reduce delivery overheads.

With reference to the method procedures shown in FIG. 2 and FIG. 3, a data frame delivery method provided in this embodiment of this application includes step S101. For the first data frame whose arrival status of the data frame is that the first data frame has not arrived, step S102 is performed. For the second data frame whose arrival status of the first data frame is that the second data frame has arrived, step S103 is performed.

In some delivery scenarios, a data frame may be delivered according to an IEEE protocol, for example, the IEEE 802.11 protocol, including the 802.11a protocol, the 802.11b protocol, the 802.11g protocol, the 802.11n (Wi-Fi 4) protocol, the 802.11ac (Wi-Fi 5) protocol, the 802.11ax (Wi-Fi 6) protocol, the IEEE 802.11be/Wi-Fi 7/EHT protocol, the IEEE 802.11bn/UHR/Wi-Fi 8 protocol, or the IEEE 802.11bf/sensing/sensing protocol. The delivery method provided in embodiments of this application can implement delivery according to the foregoing protocol, to implement delivery effect of avoiding repeated delivery and reducing a delay.

The following uses several examples to describe, in a Wi-Fi MPDU delivery implementation scenario, how to avoid repeated delivery and reduce a delay of in-order delivery by determining, based on a block acknowledgment scoreboard, whether an MPDU has arrived and determining whether to perform a delivery operation.

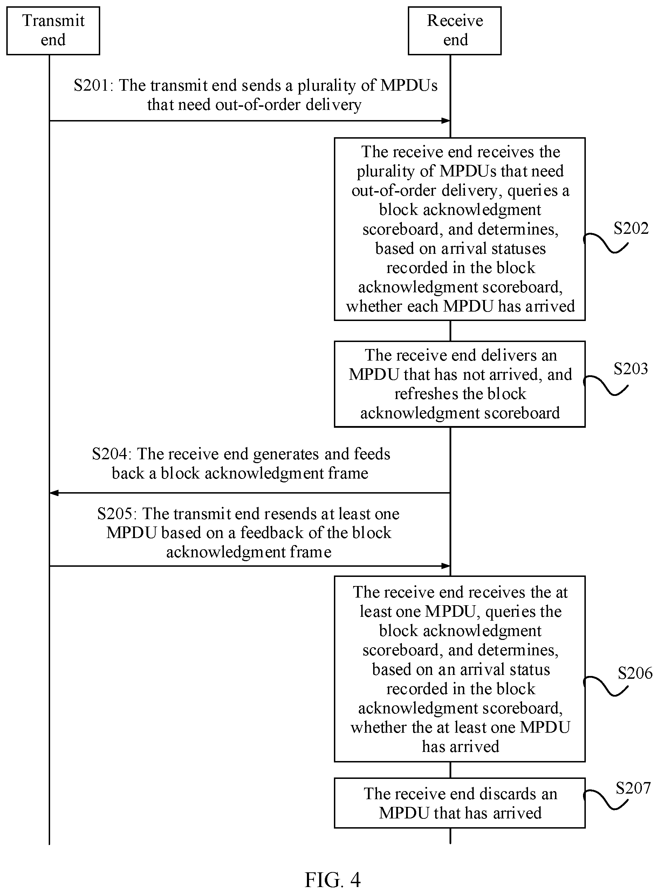

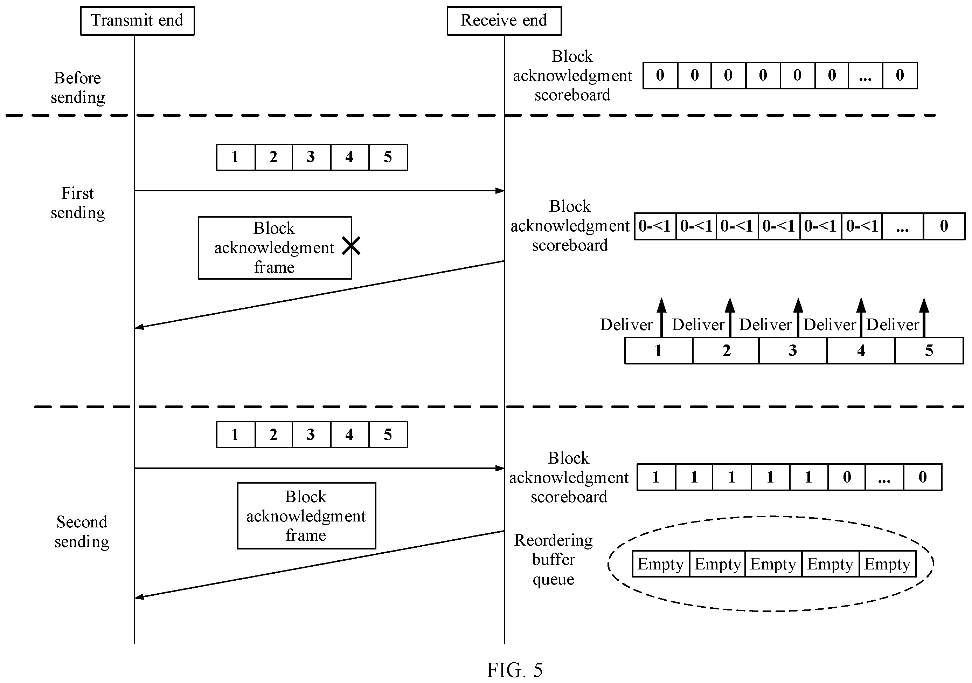

In an example, a plurality of MPDUs sent by a transmit end need out-of-order delivery, that is, immediately delivered after arriving at a receive end. FIG. 4 is a diagram 1 of an MPDU delivery procedure according to an embodiment of this application. FIG. 5 is a diagram 1 of an MPDU delivery scenario according to an embodiment of this application. As shown in FIG. 4, the method is performed by the transmit end and the receive end, and includes S201 to S207.

S201: The transmit end sends the plurality of MPDUs that need out-of-order delivery.

Optionally, the transmit end and the receive end may pre-agree on an identifier that identifies whether the MPDU is for in-order delivery or out-of-order delivery. For example, the transmit end and the receive end may pre-agree that, in a field (which may be denoted as an agreed-on field) in a packet header of the MPDU, a value, for example, 1, indicates that the MPDU is an in-order service and needs in-order delivery, for example, needs to be first buffered in a reordering buffer queue and then delivered based on a sequence number, or another value, for example, 0, indicates that the MPDU is an out-of-order service and may be immediately delivered.

Optionally, indication information may alternatively be carried in the MPDU. The indication information indicates an in-order service, to indicate the receive end to perform delivery based on in-order delivery, or the indication information indicates an out-of-order service, to indicate the receive end to perform delivery based on out-of-order delivery. The indication information may be carried in a packet header.

Refer to FIG. 5. The plurality of MPDUs that need out-of-order delivery and that are sent by the transmit end are five MPDUs, namely, MPDUs with SN=1, SN=2, SN=3, SN=4, and SN=5, and all correspond to a service flow B. In addition, when being sent for the first time, the five MPDUs each are successfully sent.

S202: The receive end receives the plurality of MPDUs that need out-of-order delivery, queries a block acknowledgment scoreboard, and determines, based on arrival statuses recorded in the block acknowledgment scoreboard, whether each MPDU has arrived.

The receive end determines, in a same manner as the transmit end, that the MPDU is an in-order service or an out-of-order service. For example, the transmit end writes 0 into an agreed-on field in a packet header of each sent MPDU according to the pre-agreement, indicating that the MPDU is an out-of-order service. The receive end may determine, based on the value being 0 of the agreed-on field in the packet header of each received MPDU, that the MPDU is an out-of-order service, and is to be delivered based on out-of-order delivery. Similarly, if the MPDU sent by the transmit end carries the indication information, the receive end determines, based on the indication of the indication information, that the MPDU is to be delivered based on out-of-order delivery.

Refer to FIG. 5. Because no MPDU is delivered yet, a value in each window of the block acknowledgment scoreboard queried by the receive end is an initial value, namely, 0. Therefore, it is determined that the MPDUs with SN=1, SN=2, SN=3, SN=4, and SN=5 has all not arrived.

S203: The receive end delivers an MPDU that has not arrived, and refreshes the block acknowledgment scoreboard.

Because the receive end determines that the five received MPDUs are all for out-of-order delivery, after receiving the five MPDUs that have not arrived, the receive end may immediately deliver the MPDUs, and refresh the block acknowledgment scoreboard. After the block acknowledgment scoreboard is refreshed, as shown in the block acknowledgment scoreboard corresponding to first sending in FIG. 5, the value in a scoreboard window of an MPDU corresponding to each SN is updated to 1.

S204: The receive end generates and feeds back a block acknowledgment frame.

After refreshing the block acknowledgment scoreboard, the receive end may send the block acknowledgment frame to the transmit end, indicating a status of receiving the MPDU. Generally, the receive end needs to quickly feed back the block acknowledgment frame to the transmit end, for example, feed back the block acknowledgment frame within 16 microseconds.

S205: The transmit end resends at least one MPDU based on a feedback of the block acknowledgment frame.

If the block acknowledgment frame indicates that an MPDU is not successfully received, the transmit end resends the MPDU. When the acknowledgment frame is lost, the transmit end does not receive the block acknowledgment frame, determines, based on the fact that the block acknowledgment frame is not received, that the receive end does not receive any MPDU, and therefore resends all the previously sent MPDUs. For example, due to a reason like loss of the block acknowledgment frame, the transmit end does not receive the block acknowledgment frame within 16 microseconds, and mistakenly considers that the receive end does not receive the five MPDUs. Therefore, the transmit end sends the MPDUs with SN=1, SN=2, SN=3, SN=4, and SN=5 again.

S206: The receive end receives the at least one MPDU, queries the block acknowledgment scoreboard, and determines, based on an arrival status recorded in the block acknowledgment scoreboard, whether the at least one MPDU has arrived.

For example, if the transmit end sends the MPDUs with SN=1, SN=2, SN=3, SN=4, and SN=5 for the second time, after receiving the MPDUs with SN=1, SN=2, SN=3, SN=4, and SN=5 again, the receive end queries the block acknowledgment scoreboard. Refer to FIG. 5. The block acknowledgment scoreboard is refreshed before second sending, and the recorded arrival statuses include that the values in the scoreboard windows corresponding to the MPDUs with SN=1, SN=2, SN=3, SN=4, and SN=5 are all 1. Therefore, the receive end determines that the MPDUs with SN=1, SN=2, SN=3, SN=4, and SN=5 have all arrived.

S207: The receive end discards an MPDU that has arrived.

If the receive end determines that the MPDUs with SN=1, SN=2, SN=3, SN=4, and SN=5 have all arrived, the receive end may discard the MPDUs with SN=1, SN=2, SN=3, SN=4, and SN=5.

In this embodiment of this application, after the transmit end sends the at least one MPDU for the second time, if the receive end determines that an MPDU has arrived, the receive end performs S207 on the MPDU; and if the receive end determines that an MPDU has not arrived, the receive end performs S203 on the MPDU that has not arrived.

It can be learned from the delivery processes in FIG. 4 and FIG. 5 that, according to the delivery method provided in this embodiment of this application, whether the MPDU for out-of-order delivery has arrived also needs to be first determined based on the block acknowledgment scoreboard, and then whether to deliver the MPDU is determined. For the MPDU that has arrived before, even if the MPDU has been delivered, the value in the block acknowledgment scoreboard being 1 indicates that the MPDU has arrived. Therefore, when the MPDU is received again, the receive end can determine that the MPDU is a duplicate MPDU, and discard the MPDU. This effectively avoids delivering the MPDU that is for out-of-order delivery and that repeatedly arrives.

In an example, a plurality of MPDUs sent by a transmit end need in-order delivery, that is, need to be first buffered in a reordering buffer queue, and then delivered based on a requirement of in-order delivery. Because the received MPDUs need to be delivered based on in-order delivery, a receive end maintains the reordering buffer queue (for a structure of the reordering buffer queue, refer to the example in FIG. 1 or FIG. 5). The receive end makes an MPDU with each SN correspond to a window of the reordering buffer queue. If the transmit end sends MPDUs with SN=1, SN=2, SN=3, SN=4, and SN=5, after determining that the MPDUs with SN=1, SN=2, SN=3, SN=4, and SN=5 are all MPDUs for in-order delivery, the receive end correspondingly buffers an MPDU with each SN in the reordering buffer queue. Refer to the foregoing example. Windows of the reordering buffer queue are respectively denoted as a window 1, a window 2, a window 3, a window 4, and a window 5 from a queue head. The receive end separately buffers the MPDUs with SN=1, SN=2, SN=3, SN=4, and SN=5 correspondingly starting from the window 1. Because there are five consecutive non-empty windows in the reordering buffer queue from the queue head, the MPDUs buffered in the consecutive non-empty windows may be delivered together, which includes: delivering the MPDUs with SN=1, SN=2, SN=3, SN=4, and SN=5 one by one in ascending order of the SNs, or delivering the MPDUs with SN=1, SN=2, SN=3, SN=4, and SN=5 at the same time. After delivery, the receive end refreshes a block acknowledgment scoreboard and the reordering buffer queue. Because the MPDUs with SN=1, SN=2, SN=3, SN=4, and SN=5 have all been delivered, the window that is in the reordering buffer queue and that corresponds to each MPDU is empty, and a window may be slid, that is, a 6^{th} window is slid to a 1^{st} window. Values in a scoreboard window 1, a scoreboard window 2, a scoreboard window 3, a scoreboard window 4, and a scoreboard window 5 of the block acknowledgment scoreboard are all updated to 1, indicating that the MPDUs have arrived. In this case, if an MPDU corresponding to any one of SN=1, SN=2, SN=3, SN=4, and SN=5, namely, an MPDU that repeatedly arrives, is received again, the method provided in embodiments of this application can effectively avoid repeated delivery. For example, if the MPDU with SN=3 is received again, according to the conventional technology, whether to deliver the MPDU is determined based on whether the reordering buffer queue is empty. Because the window 3 in the reordering buffer queue is empty, the MPDU with SN=3 is delivered again, and repeated delivery occurs. According to the method provided in embodiments of this application, whether to deliver the MPDU is determined based on an arrival status that is of the MPDU corresponding to the SN and that is recorded in the block acknowledgment scoreboard. Because the arrival status recorded in the scoreboard window 3 of the block acknowledgment scoreboard is that the MPDU has arrived, the receive end discards the MPDU with SN=3 received again, and no longer delivers the MPDU. This can effectively avoid repeated delivery.

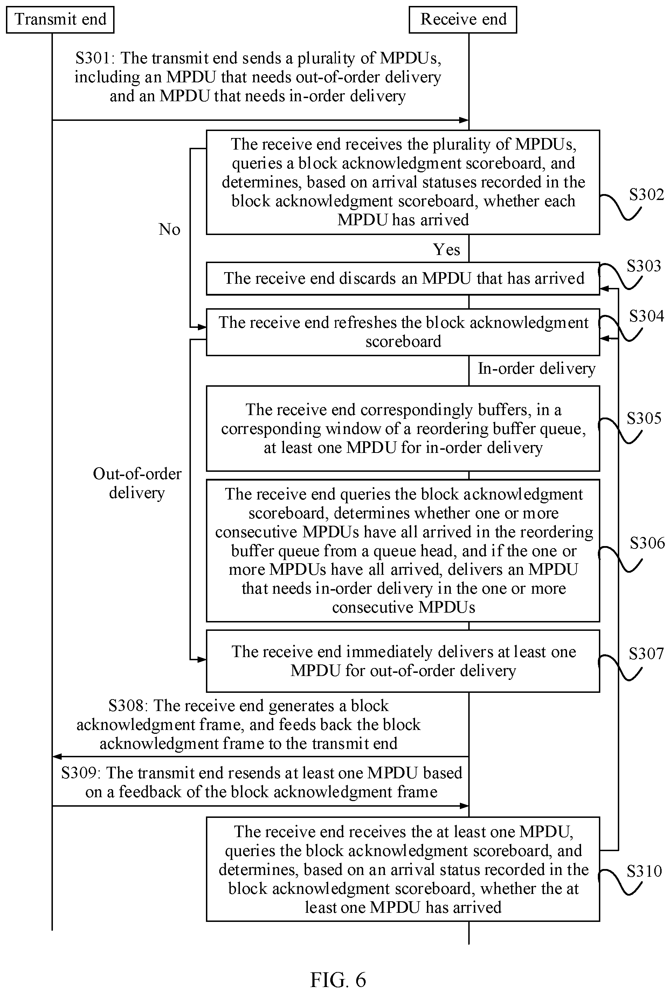

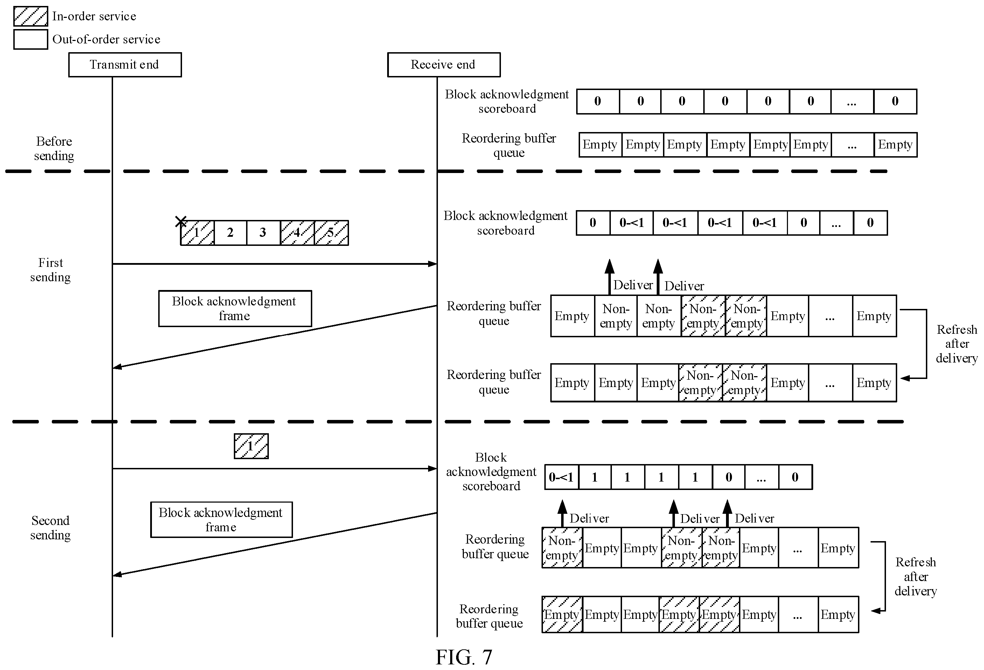

In an example, a plurality of MPDUs sent by a transmit end include both an MPDU that needs in-order delivery and an MPDU that needs out-of-order delivery. FIG. 6 is a diagram 2 of an MPDU delivery procedure according to an embodiment of this application. FIG. 7 is a diagram 2 of an MPDU delivery scenario according to an embodiment of this application. As shown in FIG. 6, the method is performed by the transmit end and a receive end, and includes S301 to S310.

S301: The transmit end sends the plurality of MPDUs, including the MPDU that needs out-of-order delivery and the MPDU that needs in-order delivery.

Refer to FIG. 7. For example, the transmit end sends five MPDUs, namely, MPDUs with SN=1, SN=2, SN=3, SN=4, and SN=5, where the MPDUs with SN=1, SN=4, and SN=5 are MPDUs of an in-order service, that is, need in-order delivery, and the MPDUs with SN=2 and SN=3 are MPDUs of an out-of-order service, that is, need out-of-order delivery. During sending, each MPDU may carry indication information, for example, the indication information is carried in a packet header. Indication information in a packet header of the MPDU with SN=1, SN=4, or SN=5 indicates that the MPDU with SN=1, SN=4, or SN=5 is an MPDU of the in-order service. Indication information in a packet header of the MPDU with SN=2 or SN=3 indicates that the MPDU with SN=2 or SN=3 is an MPDU of the out-of-order service.

S302: The receive end receives the plurality of MPDUs, queries a block acknowledgment scoreboard, and determines, based on arrival statuses recorded in the block acknowledgment scoreboard, whether each MPDU has arrived.

The receive end determines whether the received MPDU has arrived, and if the MPDU has arrived, performs S303, or if the received MPDU has not arrived, performs S304.

For example, in the example shown in FIG. 7, after the transmit end sends the five MPDUs for the first time, it is assumed that an error occurs in transmission of the MPDU with SN=1, and the receive end does not correctly receive the MPDU with SN=1, but correctly receives the MPDUs with SN=2, SN=3, SN=4, and SN=5.

Refer to FIG. 7. The receive end queries the block acknowledgment scoreboard. In the block acknowledgment scoreboard, a scoreboard window 1 corresponds to the MPDU with SN=1, a scoreboard window 2 corresponds to the MPDU with SN=2, a scoreboard window 3 corresponds to the MPDU with SN=3, a scoreboard window 4 corresponds to the MPDU with SN=4, and a scoreboard window 5 corresponds to the MPDU with SN=5. Before the plurality of MPDUs sent by the transmit end for the first time are received, values in the scoreboard windows are initial values, for example, 0, indicating that the MPDUs with SN=1, SN=2, SN=3, SN=4, and SN=5 have all not arrived. When receiving the four MPDUs and querying the block acknowledgment scoreboard, the receive end may determine that the MPDUs with SN=2, SN=3, SN=4, and SN=5 have all not arrived.

Optionally, the receive end may alternatively query whether a window that in a reordering buffer queue and that corresponds to an MPDU with each SN is empty. Generally, windows that are in the reordering buffer queue and that correspond to the MPDUs with SN=1, SN=2, SN=3, SN=4, and SN=5 may be sequentially a window 1, a window 2, a window 3, a window 4, and a window 5. In an initial state, each window is empty.

S303: The receive end discards an MPDU that has arrived.

S304: The receive end refreshes the block acknowledgment scoreboard.

The arrival statuses recorded in the block acknowledgment scoreboard are updated based on the fact that the MPDUs with SN=2, SN=3, SN=4, and SN=5 have arrived. The obtained block acknowledgment scoreboard is shown in FIG. 7. The value is still 0 after the scoreboard window 1 corresponding to the MPDU with SN=1 is refreshed, and the values in the scoreboard windows corresponding to the MPDUs with SN=2, SN=3, SN=4, and SN=5 are updated to 1, that is, the values in the scoreboard window 2, the scoreboard window 3, the scoreboard window 4, and the scoreboard window 5 are all updated to 1.

After S304, whether the MPDU is an MPDU for in-order delivery is determined. If the MPDU is an MPDU for in-order delivery, S305 is performed. Otherwise, S307 is performed.

The receive end and the transmit end pre-agree on the indication information. The receive end determines, based on the indication information carried in the received MPDUs with SN=2, SN=3, SN=4, and SN=5, that the MPDUs with SN=2 and SN=3 need out-of-order delivery, and the MPDUs with SN=4 and SN=5 need in-order delivery.

S305: The receive end correspondingly buffers, in a window of the reordering buffer queue, at least one MPDU for in-order delivery.

It is assumed that the receive end determines that the MPDU with SN=4 and the MPDU with SN=5 in the received MPDUs need in-order delivery. Refer to FIG. 7. The receive end correspondingly buffers the MPDU with SN=4 in the window 4 of the reordering buffer queue, and correspondingly buffers the MPDU with SN=4 in the window 5 of the reordering buffer queue.

S306: The receive end queries the block acknowledgment scoreboard, determines whether one or more consecutive MPDUs have all arrived in the reordering buffer queue from a queue head, and if the one or more MPDUs have all arrived, delivers an MPDU that needs in-order delivery in the one or more consecutive MPDUs.

Refer to the example in FIG. 7. If the receive end queries the block acknowledgment scoreboard, and determines that the MPDU at the queue head, namely, the window 1, of the reordering buffer queue has not arrived, because the queue head is empty, an in-order delivery procedure cannot be performed based on a requirement of in-order delivery, for example, sequential delivery started from an MPDU with a smallest SN. After receiving the MPDU with SN=1 and buffering the MPDU in the window 1, the receive end determines whether one or more consecutive MPDUs have arrived in the reordering buffer queue from the queue head, and if the one or more consecutive MPDUs have arrived, delivers an MPDU that needs in-order delivery.

For example, if the receive end queries the block acknowledgment scoreboard, and determines that the MPDUs with SN=1, SN=2, SN=3, SN=4, and SN=5 have all arrived, the receive end determines that five consecutive MPDUs (namely, the MPDUs with SN=1, SN=2, SN=3, SN=4, and SN=5) have arrived in the reordering buffer queue from the queue head, where the MPDUs with SN=1, SN=4, and SN=5 need in-order delivery, and the MPDUs with SN=1, SN=4, and SN=5 may be delivered.

S307: The receive end immediately delivers at least one MPDU for out-of-order delivery.

Refer to FIG. 7. If the receive end determines that the MPDU with SN=2 and the MPDU with SN=3 in the received MPDUs need out-of-order delivery, the receive end receives and immediately delivers the MPDUs with SN=2 and SN=3.

S308 is performed after S302.

S308: The receive end generates a block acknowledgment frame, and feeds back the block acknowledgment frame to the transmit end.

In the example shown in FIG. 7, the block acknowledgment frame indicates the transmit end to resend the MPDU with SN=1.

S309: The transmit end resends at least one MPDU based on a feedback of the block acknowledgment frame.

If the block acknowledgment frame indicates that an MPDU is not successfully received, the transmit end resends the MPDU. When the block acknowledgment frame is lost, the transmit end does not receive the block acknowledgment frame, determines, based on the fact that the block acknowledgment frame is not received, that the receive end does not receive any MPDU, and therefore resends all the previously sent MPDUs. In this example, an example in which the transmit end sends the MPDU with SN=1 for the second time is used for description.

S310: The receive end receives the at least one MPDU, queries the block acknowledgment scoreboard, and determines, based on an arrival status recorded in the block acknowledgment scoreboard, whether the at least one MPDU has arrived.

If the received MPDU has arrived, S303 is performed. If the received MPDU has not arrived, S304 is performed.

Refer to the example in FIG. 7. The transmit end sends the MPDU with SN=1 for the second time. After receiving the MPDU with SN=1, the receive end queries the block acknowledgment scoreboard, and determines that the value in the scoreboard window 1 that is in the block acknowledgment scoreboard and that corresponds to the MPDU with SN=1 is 0, that is, determines that the MPDU with SN=1 has not arrived and arrives for the first time. Therefore, the receive end buffers the MPDU with SN=1 in the corresponding window of the reordering buffer queue, namely, the window 1, refreshes the block acknowledgment scoreboard, and updates the value in the scoreboard window 1 to 1, indicating that the MPDU with SN=1 has arrived.

Optionally, in the example shown in FIG. 7, the reordering buffer queue includes windows corresponding to the plurality of MPDUs with SNs. After the transmit end sends the at least one MPDU, for example, the MPDU with SN=1, for the second time, the receive end receives the MPDU with SN=1 and determines that the MPDU with SN=1 is an MPDU that arrives for the first time, refreshes the block acknowledgment scoreboard, and buffers the MPDU with SN=1 in the window 1 of the reordering buffer queue, that is, refreshes the reordering buffer queue. After refreshing, all of the window 1, the window 4, and the window 5 that are in the reordering buffer queue and that correspond to the MPDUs with SN=1, SN=4, and SN=5 are empty, and in-order delivery may be started from the window 1. In other words, after the transmit end sends the plurality of MPDUs for the first time, the receive end waits for a 1^{st} MPDU for in-order delivery to be buffered in the reordering buffer queue. After buffering, based on the fact that, although the MPDUs with SN=2 and SN=3 have been delivered, the block acknowledgment scoreboard records that the MPDUs have arrived, the receive end considers that the five consecutive MPDUs have all arrived from the queue head, and the MPDUs with SN=1, SN=4, and SN=5 may be delivered together. Delivering together in this embodiment of this application includes two cases. One is delivering at the same time, and the other is that the MPDUs are delivered one by one in ascending order of the SNs (or in another agreed-on order or the like). In this example, that the MPDUs with SN=1, SN=4, and SN=5 are delivered together may be that the MPDUs with SN=1, SN=4, and SN=5 are delivered at the same time, or the MPDUs are delivered one by one in an order of SN=1, SN=4, and SN=5.

Optionally, when determining that the received MPDU with SN=1 is the 1^{st} MPDU for in-order delivery, the receive end may immediately deliver the MPDU with SN=1, and refresh the reordering buffer queue. If the MPDUs with SN=2 and SN=3 have been delivered based on out-of-order delivery, in the refreshed reordering buffer queue, a window is slid so that the window corresponding to the MPDU with SN=4, namely, the window 4, is slid to a 1^{st} window. Similarly, the window corresponding to the MPDU with SN=5, namely, the window 5, is slid to a 2^{nd} window. Then, delivering together is performed from the queue head, that is, the MPDUs with SN=4 and SN=5 are delivered together. This can further reduce a delay of delivering the MPDU for in-order delivery.

Optionally, in an example, the transmit end sends the MPDUs with SN=1, SN=2, SN=3, SN=4, and SN=5 for the first time, but the receive end does not successfully receive the MPDUs with SN=1 and SN=4. The receive end needs to wait until MPDUs that include the 1^{st} MPDU and whose SNs are smaller than that of the MPDU with SN=5 are all buffered in the reordering buffer queue, and then deliver all the MPDUs together. To be specific, after successfully receiving the MPDUs with SN=1 and SN=4 and buffering the MPDUs in the reordering buffer queue, the receive end delivers all the MPDUs together.

In a possible implementation scenario, when the receive end performs S308, the fed-back block acknowledgment frame is lost, and the transmit end erroneously considers that first sending fails, and resends the MPDUs with SN=1, SN=2, SN=3, SN=4, and SN=5 during second sending. After receiving, the receive end queries the block acknowledgment scoreboard. If the values in the windows that are of the block acknowledgment scoreboard and that correspond to the MPDUs with SN=2, SN=3, SN=4, and SN=5 are all 1, it may be determined that the MPDUs with SN=2, SN=3, SN=4, and SN=5 have all arrived, and the MPDUs with SN=2, SN=3, SN=4, and SN=5 are discarded. The value in a window corresponding to the MPDU with SN=1 is 0. It is determined that the MPDU with SN=1 has not arrived. The block acknowledgment scoreboard is refreshed. Then, a delivery operation is performed with reference to the delivery operation on the MPDU with SN=1 in the foregoing example. In this way, even if the MPDUs with SN=2, SN=3, SN=4, and SN=5 are repeatedly received, repeated delivery can be avoided.

Optionally, after each MPDU is delivered, the receive end may update an arrival status that is in the block acknowledgment scoreboard and that corresponds to the MPDU, that is, update the arrival status of the MPDU to arrived. For example, in the example shown in FIG. 7, after the transmit end sends the five MPDUs for the first time, the receive end receives and delivers the MPDUs with SN=2 and SN=3. Then, the receive end refreshes the block acknowledgment scoreboard, and updates the values in the window 2 corresponding to SN=2 and the window 2 corresponding to SN=3 to 1, indicating that the MPDUs with SN=2 and SN=3 have arrived. After the transmit end sends the MPDU with SN=1 again and the receive end successfully receives the MPDU, the receive end delivers the MPDUs with SN=1, SN=4, and SN=5 together, refreshes the block acknowledgment scoreboard again, and updates the values in the windows corresponding to the MPDUs with SN=1, SN=4, and SN=5 to 1, indicating that the MPDUs with SN=1, SN=4, and SN=5 have arrived. Refreshing the block acknowledgment scoreboard in time based on a delivery status can improve accuracy of determining whether the MPDU has arrived.

In this embodiment of this application, the plurality of MPDUs sent by the transmit end include the MPDUs with SN=1, SN=4, and SN=5 that need in-order delivery and the MPDUs with SN=2 and SN=3 that are for out-of-order delivery. The MPDUs with SN=2 and SN=3 are immediately delivered after arriving. After the MPDUs with SN=1, SN=4, and SN=5 all arrive at the receive end, because consecutive MPDUs with SNs have arrived, the receive end can deliver the MPDUs with SN=4 and SN=5 instead of waiting for arrival of time for forced delivery because the windows of the reordering buffer queue are empty due to delivery of the MPDUs with SN=2 and SN=3. This reduce a delay of delivering the MPDU for in-order delivery. The delivery method provided in this embodiment of this application determines, based on whether the MPDU has arrived, whether to deliver or discard the MPDU.

After the MPDUs with SN=1, SN=2, SN=3, SN=4, and SN=5 have all arrived, that is, have been received completely and delivered, the receive end refreshes the reordering buffer queue again, and a window of the reordering buffer queue is slid, that is, a 6^{th} window is slid to a current 1^{st} window, to prepare for receiving a subsequent data frame.

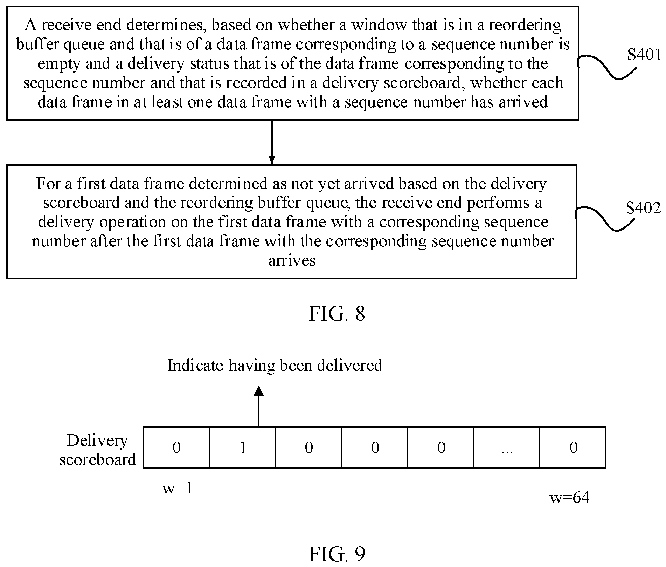

FIG. 8 is a schematic flowchart of another data frame delivery method according to an embodiment of this application. As shown in FIG. 8, the method may be performed by a receive end, and the method includes S401 and S402.

S401: The receive end determines, based on whether a window that is in a reordering buffer queue and that is of a data frame corresponding to a sequence number is empty and a delivery status that is of the data frame corresponding to the sequence number and that is recorded in a delivery scoreboard, whether each data frame in at least one data frame with a sequence number has arrived.

For example, a transmit end allocates an SN to each data frame and sends the data frame. In the following examples, an example in which the transmit end sends MPDUs whose SNs are respectively SN=1, SN=2, SN=3, SN=4, and SN=5 is used for description.

The receive end maintains the delivery scoreboard. The delivery scoreboard includes a plurality of scoreboard windows. Each scoreboard window records a delivery status of an MPDU corresponding to a sequence number. The delivery scoreboard may be refreshed after each MPDU is delivered, to update the recorded delivery status of the MPDU corresponding to the sequence number, thereby maintaining accuracy of the record. Different from the block acknowledgment scoreboard that is provided in the foregoing examples and that records an arrival status of an MPDU corresponding to each sequence number, the delivery scoreboard is mainly used to record the delivery status of the MPDU, and cannot be independently used to determine whether the MPDU has arrived at the receive end, but needs to perform determining in combination with whether a window that is in a reordering buffer queue and that is of the MPDU corresponding to the sequence number is non-empty.

As shown in FIG. 9, the delivery scoreboard includes the plurality of scoreboard windows, and each scoreboard window may correspondingly record a delivery status of an MPDU, to determine whether the MPDU corresponding to each SN is delivered. In the example shown in FIG. 9, locations of 64 windows are included from a start location of the delivery scoreboard, namely, a scoreboard window 1 (denoted as w=1 in FIG. 9) to a scoreboard window 64 (denoted as w=64 in FIG. 9). The scoreboard window 1 may be used to record a delivery status of the MPDU with SN=1, a scoreboard window 2 may be used to record a delivery status of the MPDU with SN=2, and the rest may be deduced by analogy.

Optionally, different values in the scoreboard window of the delivery scoreboard may indicate the delivery status of the MPDU. For example, a value in the scoreboard window being 1 indicates that the MPDU has been delivered, and the value in the scoreboard window being 0 indicates that the MPDU has not been delivered. The value is merely an example. Alternatively, the value being 0 may indicate that the MPDU has been delivered, and the value being 1 may indicate that the MPDU has not been delivered. Alternatively, other values, for example, 00, 01, and 000, may indicate the delivery status of the MPDU. In this embodiment of this application, an example in which the value in the scoreboard window being 1 indicates that the MPDU has been delivered and the value in the scoreboard window being 0 indicates that the MPDU has not been delivered is used for description. In an actual application scenario, the value is set based on a requirement, and is not limited to the examples in this embodiment of this application.

The receive end further maintains the reordering buffer queue. With reference to the foregoing example, the reordering buffer queue may include a window 1, a window 2, a window 3, a window 4, a window 5, and the like from a queue head.

The receive end may determine, based on both whether a window that is in the reordering buffer queue and that corresponds to the received MPDU of each SN is empty and whether a value in a scoreboard window that is of the delivery scoreboard and that corresponds to the MPDU indicates whether the MPDU has been delivered, whether the MPDU has arrived, and then determine, based on whether an MPDU has arrived, whether to perform an operation on the MPDU. Determining, by querying both the delivery scoreboard and the reordering buffer queue, whether the MPDU has arrived includes: If a value in a window that is in the delivery scoreboard and that corresponds to an MPDU with an SN is 0, and a window that is in the reordering buffer queue and that corresponds to the MPDU with the SN is empty, it may be determined that the MPDU with the SN has not arrived. Otherwise, it is determined that the MPDU has arrived.

For example, the transmit end sends the MPDUs with SN=1, SN=2, SN=3, SN=4, and SN=5. The MPDU with SN=1 corresponds to a window, that is the scoreboard window 1, of the delivery scoreboard, and corresponds to the window 1 of the reordering buffer queue, the MPDU with SN=2 corresponds to a window, that is the scoreboard window 2, of the delivery scoreboard, and corresponds to the window 2 of the reordering buffer queue, the MPDUs with other SNs may be deduced by analogy. It is assumed that the receive end receives the MPDUs with SN=1, SN=2, and SN=3. If a value in the scoreboard window 1 that is in the delivery scoreboard and that corresponds to the MPDU with SN=1 is 0, and the window 1 that is in the reordering buffer queue and that corresponds to the MPDU with SN=1 is empty, it may be determined that the MPDU with SN=1 has not arrived. If a value in the scoreboard window 2 that is in the delivery scoreboard and that corresponds to the MPDU with SN=2 is 1, and the window 2 that is in the reordering buffer queue and that corresponds to the MPDU with SN=2 is empty, it may be determined that the MPDU with SN=2 arrives and has been delivered, that is, it is determined that the MPDU has arrived. If a value in the scoreboard window 3 that is in the delivery scoreboard and that corresponds to the MPDU with SN=3 is 0, and the window 3 that is in the reordering buffer queue and that corresponds to the MPDU with SN=3 is non-empty, it may be determined that the MPDU with SN=3 has been arrived and buffered in the reordering buffer queue, and it is determined that the MPDU has arrived.

S402: For a first data frame determined as not yet arrived based on the delivery scoreboard and the reordering buffer queue, the receive end performs a delivery operation on the first data frame with a corresponding sequence number after the first data frame with the corresponding sequence number arrives.

If the receive end determines that the first data frame is a data frame that has not arrived, the receive end performs the delivery operation after the first data frame arrives. For this step, refer to S102. Details are not described again.

Optionally, the method further includes: for a second data frame determined as arrived based on the delivery scoreboard and the reordering buffer queue, discarding the second data frame with a corresponding sequence number after the second data frame with the corresponding sequence number arrives again.

For example, if the second data frame is any one of the MPDUs with SN=2, SN=3, SN=4, and SN=5, for example, the second data frame is the MPDU with SN=2, and it is determined, according to the determining method in S401, that the MPDU with SN=2 has arrived, the receive end discards the MPDU with SN=2 after receiving the MPDU with SN=2 again. Regardless of whether the second data frame is for in-order delivery, or is for out-of-order delivery, when receiving the second data frame, the receive end discards the second data frame as long as the receive end determines the arrival status of the second data frame is that the second data frame has arrived. In this way, a possibility that the second data frame is repeatedly delivered can be effectively avoided, to effectively reduce delivery overheads.

The following uses several examples to describe, in a Wi-Fi MPDU delivery implementation scenario, how to avoid repeated delivery and reduce a delay of in-order delivery by determining, based on both a delivery scoreboard and a reordering buffer queue to determine whether to perform a delivery operation, whether an MPDU has arrived.

Optionally, in this embodiment of this application, a transmit end and a receive end may pre-agree on an identifier that identifies whether an MPDU is for in-order delivery or out-of-order delivery. For example, the transmit end and the receive end may pre-agree that, in an agreed-on field in a packet header of the MPDU, a value being 0 indicates that the MPDU is an in-order service and needs in-order delivery and the value being 1 indicates that the MPDU is an out-of-order service and may be immediately delivered. Alternatively, the MPDU carries indication information, where the indication information indicates an in-order service that needs in-order delivery, or the indication information indicates an out-of-order service that may be immediately delivered. In a scenario in which an MPDU for in-order delivery and an MPUD for out-of-order delivery are to be delivered, the MPDU generally carries indication information, indicating that the MPDU needs in-order delivery or out-of-order delivery.

For example, when Wi-Fi MPDUs are all MPDUs for out-of-order delivery, determining, based on whether the MPDU has arrived, whether to perform a delivery operation can effectively avoid repeated delivery. Before the transmit end sends the MPDU, a delivery scoreboard maintained by the receive end includes a scoreboard window 1, a scoreboard window 2, a scoreboard window 3, a scoreboard window 4, a scoreboard window 5, and the like, and values in the scoreboard windows are all initial values, namely, 0. In a delivery method for determining, based on both the delivery scoreboard and a reordering buffer queue, whether the MPDU has arrived, regardless of whether the MPDU sent by the transmit end includes an MPDU for in-order delivery, the receive end needs to maintain the reordering buffer queue. Before the sent MPDU sent for the first time is received, windows of the reordering buffer queue from a queue head include a window 1, a window 2, a window 3, a window 4, a window 5, and the like, and all the windows are empty. It is assumed that the transmit end sends MPDUs with SN=1, SN=2, SN=3, SN=4, and SN=5 for the first time that are all for out-of-order delivery. After first sending, the receive end successfully receives the five MPDUs, immediately delivers the five MPDUs based on the fact that the five MPDUs are five MPDUs for out-of-order delivery, and then refreshes the delivery scoreboard after delivery. In the delivery scoreboard, the values in the scoreboard window 1, the scoreboard window 2, the scoreboard window 3, the scoreboard window 4, and the scoreboard window 5 that are in a one-to-one correspondence with the MPDUs with SN=1, SN=2, SN=3, SN=4, and SN=5 are all updated to 1, indicating that the MPDUs have been delivered. In this case, the windows in the reordering buffer queue are all still empty. If the receive end sends a block acknowledgment frame to the transmit end, indicating that the MPDUs with SN=1, SN=2, SN=3, SN=4, and SN=5 have all been successfully received, but an error, for example, loss, occurs in transmission of the block acknowledgment frame, the transmit end does not receive the block acknowledgment frame, and erroneously considers that the receive end does not successfully receive the MPDUs. Therefore, the transmit end sends the MPDUs with SN=1, SN=2, SN=3, SN=4, and SN=5 for the second time. After receiving the MPDUs with SN=1, SN=2, SN=3, SN=4, and SN=5 again, the receive end queries the delivery scoreboard and the reordering buffer queue, determines, based on the fact that the value in the scoreboard window 1 that is of the delivery scoreboard and that correspond to the MPDU with SN=1 is 1 and the window 1 that is of the reordering buffer queue and that corresponds to the MPDU with SN=1 is empty, that the MPDU with SN=1 has arrived, and discards the MPDU with SN=1, and the MPDUs with SN=2, SN=3, SN=4, and SN=5 may be deduced by analogy. The receive end determines, based on both the delivery scoreboard and the reordering buffer queue, whether the MPDU has arrived, and can discard the MPDUs with SN=1, SN=2, SN=3, SN=4, and SN=5. This effectively avoids repeated delivery.

For example, when Wi-Fi MPDUs are all MPDUs for in-order delivery, determining, based on whether the MPDU has arrived, whether to perform a delivery operation can effectively avoid repeated delivery. Before the transmit end sends the MPDU, a delivery scoreboard maintained by the receive end includes a scoreboard window 1, a scoreboard window 2, a scoreboard window 3, a scoreboard window 4, a scoreboard window 5, and the like, and values in all the scoreboard windows are all initial values, namely, 0. A maintained reordering buffer queue includes a window 1, a window 2, a window 3, a window 4, a window 5, and the like, and all the windows are empty. It is assumed that the transmit end sends MPDUs with SN=1, SN=2, SN=3, SN=4, and SN=5 for the first time that are all for in-order delivery, but the MPDU with SN=1 fails to be sent, and the MPDUs with SN=2, SN=3, SN=4, and SN=5 are successfully sent. After receiving, the receive end correspondingly buffers the MPDUs with SN=2, SN=3, SN=4, and SN=5 in the window 2, the window 3, the window 4, and the window 5 of the reordering buffer queue, and refreshes the delivery scoreboard and the reordering buffer queue. In this case, because no MPDU is delivered, the values in the scoreboard windows of the delivery scoreboard are still 0, and the window 1 that is in the reordering buffer queue and that corresponds to the MPDU with SN=1 is empty, and the window 2, the window 3, the window 4, and the window 5 are non-empty. In other words, the MPDU with SN=1 has not arrived, and the MPDUs with SN=2, SN=3, SN=4, and SN=5 have all arrived. In this case, the receive end sends a block acknowledgment frame to the transmit end, to indicate to resend the MPDU with SN=1. During second sending, the transmit end erroneously resends the MPDU with SN=2, that is, sends the MPDUs with SN=1 and SN=2 for the second time. After receiving the MPDUs with SN=1 and SN=2, the receive end queries the delivery scoreboard and the reordering buffer queue, determines that the MPDU with SN=1 has not arrived, and the MPDUs with SN=2, SN=3, SN=4, and SN=5 have all arrived, therefore discards the MPDU with SN=2, buffers the MPDU with SN=1 in the window 1 of the reordering buffer queue, and performs delivery according to the delivery method for the MPDU for in-order delivery in the foregoing examples. After delivery, values of first five scoreboard windows in the delivery scoreboard are all updated to 1. For example, if a block acknowledgment frame fed back by the receive end is lost in this case, and the transmit end sends the MPDUs with SN=1 and SN=2 once again, the receive end may determine, based on the fact that the windows that are in the reordering buffer queue and that correspond to SN=1 and SN=2 are empty but the values of the scoreboard windows that are in the delivery scoreboard and that correspond to SN=1 and SN=2 are 1, that the MPDUs with SN=1 and SN=2 have arrived and are repeatedly arrived MPDUs, and discard the MPDUs with SN=1 and SN=2. This effectively avoids repeated delivery.

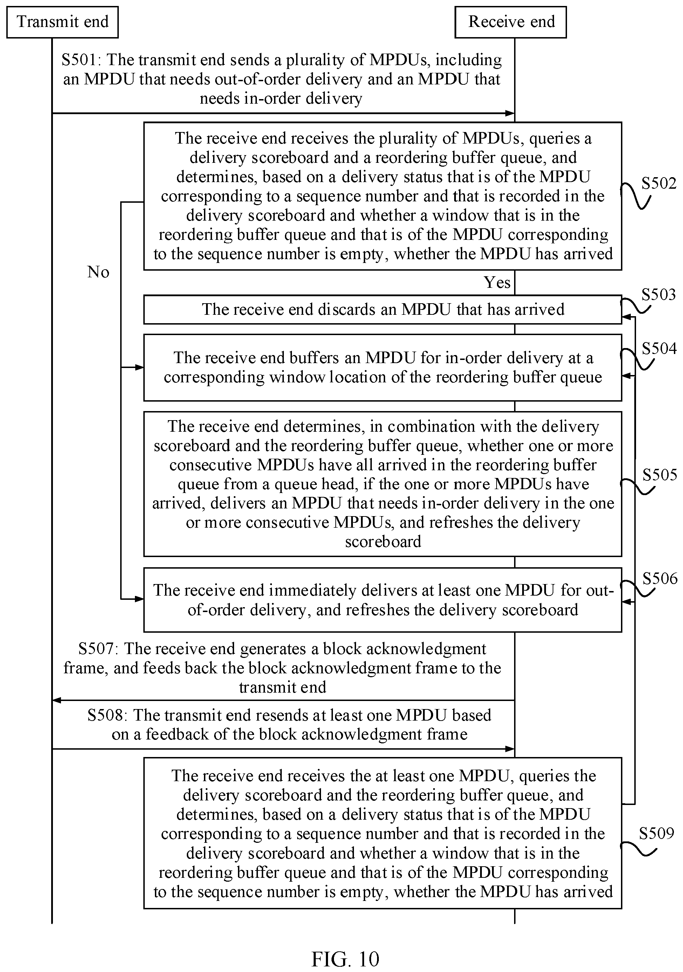

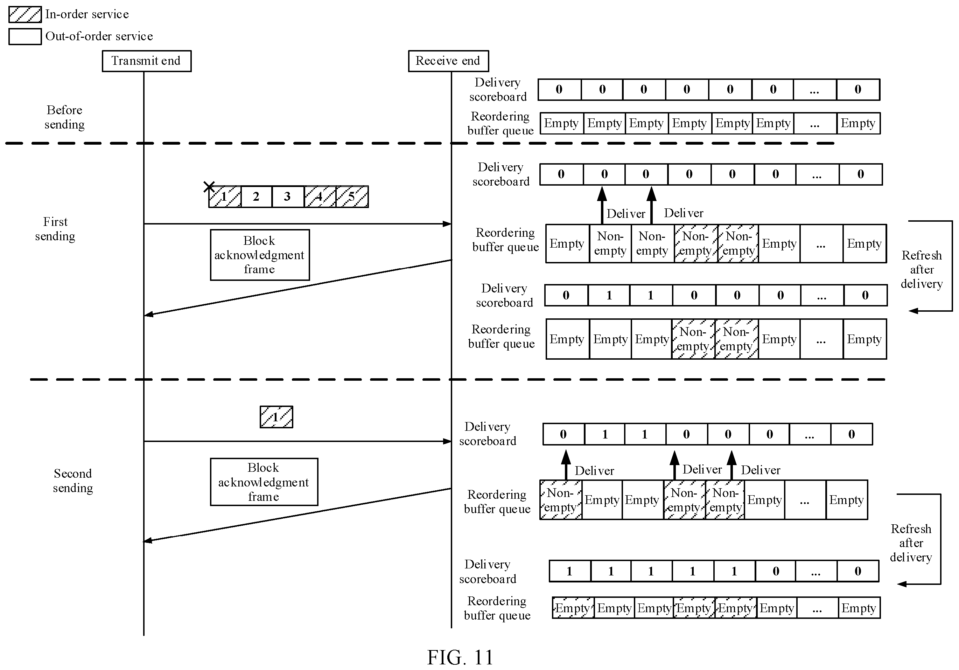

For example, when Wi-Fi MPDUs include an MPDU for in-order delivery and an MPDU for out-of-order delivery, determining, based on whether the MPDU has arrived, whether to perform a delivery operation can effectively avoid repeated delivery, and can ensure normal delivery of the MPDU for in-order delivery, and reduce a delay. FIG. 10 is a diagram 3 of an MPDU delivery procedure according to an embodiment of this application. FIG. 11 is a diagram 3 of an MPDU delivery scenario according to an embodiment of this application. As shown in FIG. 10, the method is performed by the transmit end and the receive end, and includes S501 to S509.

S501: The transmit end sends a plurality of MPDUs, including an MPDU that needs out-of-order delivery and an MPDU that needs in-order delivery.

Refer to FIG. 10. The transmit end sends five MPDUs, namely, MPDUs with SN=1, SN=2, SN=3, SN=4, and SN=5, where the MPDUs with SN=1, SN=4, and SN=5 are MPDUs of an in-order service, that is, need in-order delivery, and the MPDUs with SN=2 and SN=3 are MPDUs of an out-of-order service, that is, need out-of-order delivery. During sending, each MPDU may carry indication information, for example, the indication information is carried in a packet header. Indication information in the MPDU with SN=1, SN=4, or SN=5 indicates that the MPDU with SN=1, SN=4, or SN=5 is an MPDU of the in-order service. Indication information in the MPDU with SN=2 or SN=3 indicates that the MPDU with SN=2 or SN=3 is an MPDU of the out-of-order service.

In the example shown in FIG. 10, during first sending by the transmit end, an error occurs in transmission of the MPDU with SN=1, and other MPDUs are correctly sent.

S502: The receive end receives the plurality of MPDUs, queries a delivery scoreboard and a reordering buffer queue, and determines, based on a delivery status that is of the MPDU corresponding to a sequence number and that is recorded in the delivery scoreboard and whether a window that is in the reordering buffer queue and that is of the MPDU corresponding to the sequence number is empty, whether the MPDU has arrived.

It is assumed that the receive end does not correctly receive the MPDU with SN=1, and correctly receives the MPDUs with SN=2, SN=3, SN=4, and SN=5.

Refer to FIG. 10. The receive end queries the delivery scoreboard. Refer to the foregoing example. In an initial state of the delivery scoreboard, a value in each scoreboard window is 0. The receive end queries the reordering buffer queue. In an initial state of the reordering buffer queue, each window is empty.

That the receive end determines, based on both the delivery scoreboard and the reordering buffer queue, whether the received MPDU has arrived includes: In the delivery scoreboard, if a value in a scoreboard window that corresponds to an MPDU with an SN is 0, and a window that is in the reordering buffer queue and that corresponds to the MPDU with the SN is empty, it may be determined that the MPDU with the SN has not arrived. Otherwise, it is determined that the MPDU has arrived. If the receive end determines that the MPDU has arrived, S503 is performed. If the receive end determines that the MPDU has not arrived, the receive end determines whether the MPDU is an MPDU for in-order delivery. If the MPDU is an MPDU for in-order delivery, S504 is performed. Otherwise, S506 is performed.

In the example shown in FIG. 10, after receiving the MPDUs with SN=2, SN=3, SN=4, and SN=5, the receive end determines that the MPDUs with SN=2, SN=3, SN=4, and SN=5 have all not arrived, and performs S505.

S503: The receive end discards an MPDU that has arrived.

S504: The receive end correspondingly buffers at least one MPDU for in-order delivery in a window of the reordering buffer queue.

S505: The receive end determines, in combination with the delivery scoreboard and the reordering buffer queue, whether one or more consecutive MPDUs have all arrived in the reordering buffer queue from a queue head, if the one or more MPDUs have arrived, delivers an MPDU that needs in-order delivery in the one or more consecutive MPDUs, and refreshes the delivery scoreboard.

S506: The receive end immediately delivers at least one MPDU for out-of-order delivery, and refreshes the delivery scoreboard.

In the example shown in FIG. 10, after receiving the MPDUs with SN=2, SN=3, SN=4, and SN=5, the receive end determines that the MPDUs with SN=2 and SN=3 need out-of-order delivery, immediately delivers the MPDUs with SN=2 and SN=3, and refreshes the delivery scoreboard. In this case, the delivery scoreboard is refreshed, and accordingly, a value in the scoreboard window 2 corresponding to SN=2 and a value in the scoreboard window 3 corresponding to SN=3 are 1, and a value in another scoreboard window is still 0.

The MPDUs with SN=4 and SN=5 need in-order delivery, and then are buffered in corresponding windows of the reordering buffer queue. To be specific, the MPDU with SN=4 is buffered in a window 4 of the reordering buffer queue, and the MPDU with SN=5 is buffered in a window 5 of the reordering buffer queue. The reordering buffer queue is refreshed, and accordingly, the window 4 and the window 5 of the reordering buffer queue are non-empty, and another window is still empty. According to the determining method provided in the foregoing examples, it may be determined that the MPDUs with SN=2, SN=3, SN=4, and SN=5 have arrived, and the MPDU with SN=1 have not arrived. In the example shown in FIG. 10, when querying the reordering buffer queue, the receive end finds that a 1^{st} window, namely, a window 1, at the queue head is empty. Therefore, a delivery procedure cannot be started based on a requirement of in-order delivery, for example, delivery started from an MPDU with a smallest SN. The receive end needs to wait until the MPDU with SN=1 is received and buffered in the window 1, and then starts in-order delivery.

S507 is performed after S502.

S507: The receive end generates a block acknowledgment frame, and feeds back the block acknowledgment frame to the transmit end.

In this example, the block acknowledgment frame indicates the transmit end to resend the MPDU with SN=1.

S508: The transmit end resends at least one MPDU based on a feedback of the block acknowledgment frame.

For a method for determining, by the transmit end based on the block acknowledgment frame, the MPDU to be resent, refer to the foregoing example. Details are not described again. In this example, the transmit end sends the MPDU with SN=1 for the second time based on the indication of the block acknowledgment frame, and sending succeeds.

S509: The receive end receives the at least one MPDU, queries the delivery scoreboard and the reordering buffer queue, and determines, based on a delivery status that is of the MPDU corresponding to a sequence number and that is recorded in the delivery scoreboard and whether a window that is in the reordering buffer queue and that is of the MPDU corresponding to the sequence number is empty, whether the MPDU has arrived.

Refer to the example in FIG. 10. The at least one MPDU sent by the transmit end for the second time is the MPDU with SN=1. After receiving the MPDU with SN=1, the receive end determines, based on both the fact that a value in a scoreboard window 1 that is in the delivery scoreboard and that corresponds to the MPDU with SN=1 is 0 and the fact that the window 1 that is in the reordering buffer queue and that corresponds to the MPDU with SN=1 is empty, that the MPDU with SN=1 has not arrived, that is, arrives for the first time, and determines, based on indication information carried in the MPDU with SN=1, that the MPDU with SN=1 is an MPDU that needs in-order delivery. The MPDU with SN=1 is buffered in the window 1 of the reordering buffer queue, and the reordering buffer queue is refreshed. After the reordering buffer queue is refreshed, the window 1, the window 4, and the window 5 are non-empty, and the window 2 and the window 3 are empty. Delivery statuses in the delivery scoreboard are as follows: The value in the scoreboard window 2 corresponding to SN=2 and the value in the scoreboard window 3 corresponding to SN=3 are 1, and a value in another scoreboard window is still 0. The receive end may determine that the MPDUs with SN=1, SN=2, SN=3, SN=4, and SN=5 have all arrived. Although window 2 and window 3 that are in the reordering buffer queue and that correspond to the MPDUs with SN=2 and SN=3 are empty, the delivery scoreboard shows that the MPDUs with SN=2 and SN=3 have been delivered, indicating that the MPDUs with SN=2 and SN=3 have arrived. Therefore, it may be considered that consecutive SNs in in-order delivery are completely received, and delivery of the MPDUs in the window 4 and the window 5 is not affected. The receive end may perform the delivery operation on the MPDUs with SN=1, SN=4, and SN=5 based on the requirement of in-order delivery.

Optionally, when delivering MPDUs for in-order delivery, the receive end may wait until a 1^{st} MPDU for in-order delivery is buffered in the reordering buffer queue, and then deliver the MPDUs together. For a manner of delivering the MPDUs together, refer to the example in S308. Details are not described again.

Optionally, when determining that the received MPDU with SN=1 is the 1^{st} MPDU for in-order delivery, the receive end may immediately deliver the MPDU with SN=1, and refresh the reordering buffer queue and the delivery scoreboard. If the MPDUs with SN=2 and SN=3 have been delivered based on out-of-order delivery, in the refreshed reordering buffer queue, a window is slid so that the window 4 corresponding to the MPDU with SN=4 is slid to the 1^{st} window. Similarly, the window 5 corresponding to the MPDU with SN=5 is slid to a 2^{nd} window. Then, the MPDUs with SN=4 and SN=5 are delivered together. This can reduce a delay of delivering the MPDU for in-order delivery.

After the MPDUs with SN=1, SN=2, SN=3, SN=4, and SN=5 are all delivered, the delivery scoreboard and the reordering buffer queue are refreshed. The delivery scoreboard is refreshed, and values in scoreboard windows corresponding to the MPDUs with SN=1, SN=2, SN=3, SN=4, and SN=5 are accordingly 1, and a value in another scoreboard window is still 0. The reordering buffer queue is refreshed, and locations corresponding to the MPDUs with SN=1, SN=2, SN=3, SN=4, and SN=5 are accordingly empty, and a window of the reordering buffer queue is slid, that is, a 6^{th} window is slid to a location of the 1^{st} window, to prepare for receiving a next data frame group.

The delivery method provided in this embodiment of this application can determine, based on both the delivery scoreboard and the reordering buffer queue, whether the MPDU has arrived. When the MPDU is delivered according to this method, an arrival status of the MPDU can be determined based on both the delivery status in an existing delivery scoreboard and a buffer status of whether a window in the reordering buffer queue is empty. This can avoid repeated delivery of the MPDU. In the method, the delivery status in the delivery scoreboard can be further added based on logic of whether the reordering buffer queue is empty according to the 802.11 protocol, to determine the arrival status of the MPDU. In other words, a small modification is made to a currently used delivery method, so that repeated delivery can be effectively avoided, and during mixed delivery, it can be ensured that a delay of in-order delivery is low. Therefore, costs of performing delivery by using the method can be effectively reduced.

Optionally, in the scenario that is provided in this embodiment of this application and in which the arrival status of the MPDU is determined based on both the delivery status in the delivery scoreboard and the buffer status in the reordering buffer queue, the receive end may further maintain a block acknowledgment scoreboard. The block acknowledgment scoreboard is refreshed once each time the MPDU arrives, records an arrival status of each MPDU, and is mainly used to generate a block acknowledgment frame, to feed back, to the transmit end, a status of receiving the MPDU. In this scenario, it is assumed that the transmit end sends the MPDUs with SN=1, SN=2, SN=3, SN=4, and SN=5 for the first time, but the MPDU with SN=1 is lost. In this case, after correctly receiving the MPDUs with SN=2, SN=3, SN=4, and SN=5, the receive end refreshes the block acknowledgment scoreboard, where records are updated to the MPDU with SN=1 having not arrived, and the MPDUs with SN=2, SN=3, SN=4, and SN=5 having arrived. For details, refer to the example of in-order delivery, out-of-order delivery, or mixed delivery in FIG. 8 to FIG. 10. The reordering buffer queue is refreshed each time an MPDU is buffered, and the delivery scoreboard is refreshed each time the MPDU is delivered. In this case, because the MPDU with SN=1 does not arrive at the receive end, the MPDU with SN=1 is naturally not buffered in the reordering buffer queue, and is not delivered; the MPDU with SN=2 and the MPDU with SN=3 are MPDUs for out-of-order delivery, are not buffered in the reordering buffer queue, and are directly delivered; and the MPDU with SN=4 and the MPDU with SN=5 are MPDUs for in-order delivery, are buffered in the reordering buffer queue, and are temporarily not delivered. In this case, records in the delivery scoreboard are that the MPDU with SN=1 is not delivered, the MPDU with SN=2 is delivered, the MPDU with SN=3 is delivered, the MPDU with SN=4 is not delivered, and the MPDU with SN=5 is not delivered.

The transmit end resends the MPDU with SN=1 for the second time. After the receive end correctly receives the MPDU with SN=1, the record in the block acknowledgment scoreboard is updated to the MPDU with SN=1 having arrived. The receive end does not perform an operation on the MPDU with SN=1 based on the block acknowledgment scoreboard, but determines, based on a delivery status recorded in the delivery scoreboard and buffer statuses in the reordering buffer queue that the MPDU with SN=1 is empty and the MPDU with SN=4 and the MPDU with SN=5 are being buffered (that is, non-empty), that the MPDU with SN=1 has not been delivered, the MPDU with SN=2 and the MPDU with SN=3 have been delivered, and the MPDU with SN=4 and the MPDU with SN=5 have not been delivered but are being buffered. In this case, the receive end performs in-order delivery on the MPDU with SN=1, the MPDU with SN=4, and the MPDU with SN=5, and then refreshes the delivery scoreboard, where the records are updated to the MPDU with SN=1, the MPDU with SN=4, and the MPDU with SN=5 having been delivered.

In this scenario, the block acknowledgment scoreboard is mainly used to record an arrival status of an MPDU of each SN.

The method in the foregoing embodiments may be applied to a data frame delivery apparatus. The data frame delivery apparatus may be a communication apparatus serving as a non-AP site (logical function). The communication apparatus may be a terminal, a communication assembly in the terminal, or a circuit or a chip (for example, a modem (Modem) chip, also referred to as a baseband (baseband) chip, or a system on chip (System on Chip, SoC) chip or a system in package (System in Package, SIP) chip including a modem core) that is responsible for a communication function in the terminal.

The data frame delivery apparatus may alternatively be a communication apparatus serving as an access point AP (logical function). The communication apparatus may be an AP device, a communication assembly in the AP device, or a circuit or a chip (for example, a modem (Modem) chip, also referred to as a baseband (baseband) chip, or a system on chip (System on Chip, SoC) chip or a system in package (System in Package, SIP) chip including a modem core) that is responsible for a communication function in the AP device.

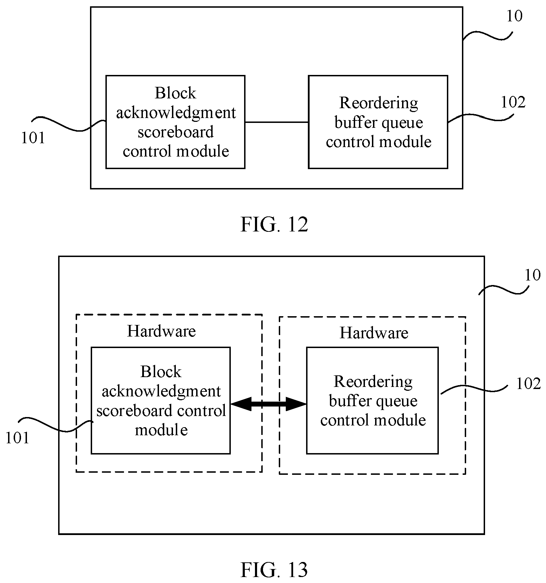

Embodiments of this application provide a data frame delivery apparatus. FIG. 12 is a diagram 1 of a structure of a first apparatus according to an embodiment of this application. The first apparatus 10 includes at least one control module. The control modules are coupled to each other. As shown in FIG. 12, the control module includes a block acknowledgment scoreboard control module 101 and a reordering buffer queue control module 102.

The block acknowledgment scoreboard control module 101 is configured to update an arrival status that is of a data frame corresponding to a sequence number and that is recorded in a block acknowledgment scoreboard. For example, performing update each time a data frame is received including: performing update after a data frame, for example, an MPDU, for out-of-order delivery is delivered, and performing update after a data frame, for example, an MPDU, for in-order delivery is buffered in a reordering buffer queue. Optionally, for refreshing the block acknowledgment scoreboard by the block acknowledgment scoreboard control module 101, refer to the examples in S101 to S103, S201 to S207, and S301 to S308.

The reordering buffer queue control module 102 is configured to determine, based on the arrival status that is of the data frame corresponding to the sequence number and that is recorded in the block acknowledgment scoreboard, whether each data frame in at least one data frame with a sequence number has arrived.

The reordering buffer queue control module 102 is configured to: for a first data frame recorded as not yet arrived in the block acknowledgment scoreboard, perform a delivery operation on the first data frame with a corresponding sequence number after the first data frame with the corresponding sequence number arrives.

In a possible implementation, the reordering buffer queue control module 102 is further configured to: for a second data frame recorded as arrived in the block acknowledgment scoreboard, discard the second data frame with a corresponding sequence number after the second data frame with the corresponding sequence number arrives again.

The first apparatus may be used in the delivery methods shown in FIG. 2 to FIG. 7 and shown in the examples in S101 to S103, S201 to S207, S301 to S308, and the like. The first apparatus may further include a transceiver module, mainly configured to receive a plurality of data frames, for example, MPDUs, with different SNs sent by a transmit end. After receiving the MPDU, the reordering buffer queue control module 102 queries the block acknowledgment scoreboard, to determine whether a received MPDU with each SN is an MPDU that has arrived; if the MPDU has arrived, discards the MPDU, or if the MPDU has not arrived, that is, arrives for the first time, determines, based on the foregoing examples, whether the MPDU is an MPDU for in-order delivery or an MPDU for out-of-order delivery; and then buffers an MPDU for in-order delivery in the reordering buffer queue, or immediately delivers an MPDU for out-of-order delivery. Each time the MPDU for in-order delivery is buffered, the reordering buffer queue control module 102 performs control to refresh the reordering buffer queue once. Optionally, for refreshing by the reordering buffer queue control module 102, refer to the examples in S201 to S207 and S301 to S308. Each time the MPDU is delivered or the MPDU for in-order delivery is buffered in the reordering buffer queue, the block acknowledgment scoreboard control module 101 performs control to refresh the block acknowledgment scoreboard. For an arrival status recorded after refreshing, refer to the examples in FIG. 2 to FIG. 7. Details are not described again.

In a possible implementation, the reordering buffer queue control module 102 is specifically configured to: after the transceiver module receives the first data frame with the corresponding sequence number, determine that the first data frame is a data frame for in-order delivery, and buffer the first data frame in the reordering buffer queue; and after an initial data frame for in-order delivery is buffered in the reordering buffer queue, deliver the first data frame and the initial data frame together. For a specific delivery method, refer to the example in S301 to S308.

In a possible implementation, the reordering buffer queue control module 102 is specifically configured to: after the transceiver module receives the first data frame with the corresponding sequence number, determine that the first data frame is a data frame for in-order delivery, and buffer the first data frame in the reordering buffer queue; and after each data frame with a sequence number smaller than that of the first data frame, including an initial data frame, is buffered in the reordering buffer queue, deliver the first data frame and a previous data frame together, where the data frame includes the initial data frame and each data frame whose corresponding sequence number is smaller than that of the first data frame. For a specific delivery method, refer to the example in S301 to S308.

In a possible implementation, the reordering buffer queue control module 102 is specifically configured to refresh the reordering buffer queue after the first data frame and the initial data frame are delivered together. For sliding of a window of the buffer queue, refer to the foregoing example.

In a possible implementation, the reordering buffer queue control module 102 is specifically configured to: after the transceiver module receives the first data frame with the corresponding sequence number, determine that the first data frame is the initial data frame for in-order delivery; and deliver the initial data frame, and refresh the reordering buffer queue. For example, when determining that a received MPDU with SN=1 is the 1^{st} MPDU for in-order delivery, a receive end may immediately deliver the MPDU with SN=1, and refresh the reordering buffer queue. This can further reduce a delay of delivering the MPDU for in-order delivery.

In a possible implementation, after the first data frame with the corresponding sequence number is received, it is determined that the first data frame is a data frame for out-of-order delivery, and the first data frame is immediately delivered. For a specific delivery method, refer to the example in S201 to S207.

In a possible implementation, the block acknowledgment scoreboard control module 101 is further configured to: after the first data frame is successfully delivered, update, to arrived, the arrival status that is in the block acknowledgment scoreboard and that corresponds to the first data frame.

When the first apparatus receives the data frame, the block acknowledgment scoreboard control module 101 is further configured to: generate and send a block acknowledgment frame. The block acknowledgment frame has a high delay requirement. For example, feedback needs to be completed within 16 microseconds. Therefore, the block acknowledgment scoreboard control module 101 that generates and sends the block acknowledgment frame is usually implemented by using hardware. However, an operation performed by the reordering buffer queue control module has a low delay requirement, and the reordering buffer queue control module may be implemented by using software or hardware.

Therefore, the first apparatus may be implemented in the following several manners.

In an example, FIG. 13 is a diagram 2 of a structure of the first apparatus according to an embodiment of this application. As shown in FIG. 13, the block acknowledgment scoreboard control module 101 in the first apparatus 10 is a hardware module, and the reordering buffer queue control module 102 is also a hardware module. For example, the block acknowledgment scoreboard control module 101 may be a chip (included) produced according to different standards, for example, a hardware module in an 802.11 chip, and the reordering buffer queue control module 102 may be another hardware module in the 802.11 chip, or the block acknowledgment scoreboard control module 101 and the reordering buffer queue control module 102 are integrated into a hardware module in an 802.11 chip.

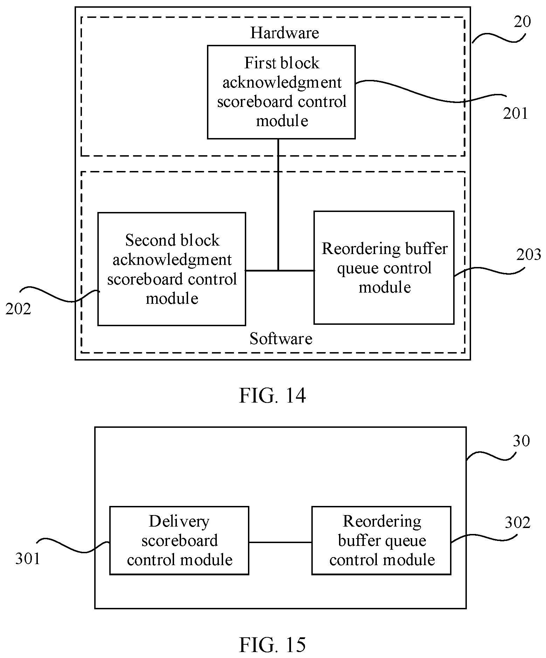

In an example, FIG. 14 is a diagram 3 of a structure of a first apparatus according to an embodiment of this application. As shown in FIG. 14, the first apparatus 20 includes a first block acknowledgment scoreboard control module 201, a second block acknowledgment scoreboard control module 202, and a reordering buffer queue control module 203. A control operation on the reordering buffer queue by the reordering buffer queue control module may be implemented in software, but the block acknowledgment frame has a high delay requirement, and needs to be implemented on hardware to minimize a delay. Therefore, in this embodiment of this application, a control operation by the acknowledgment scoreboard control module 202 is divided into two parts. The first block acknowledgment scoreboard control module 201 is configured to: generate and send the block acknowledgment frame. The second block acknowledgment scoreboard control module 202 is configured to perform writing and reading in the block acknowledgment scoreboard, that is, update a recorded arrival status, and provide, for the reordering buffer queue control module 203, an arrival status that is of a data frame and that needs to be queried. Refer to FIG. 14. The first block acknowledgment scoreboard control module 201 is a hardware module. The second block acknowledgment scoreboard control module 202 and the reordering buffer queue control module 203 are software modules, and may run on a CPU. In this case, the first block acknowledgment scoreboard control module 201 and software modules, namely, the second block acknowledgment scoreboard control module 202 and the reordering buffer queue control module 203, may be integrated into one chip, or may be respectively disposed in two chips. The data frame is delivered through interaction with reference to the delivery method in the foregoing examples. The second block acknowledgment scoreboard control module 202 and the reordering buffer queue control module 203 interact at a software level with reference to the foregoing embodiments, to complete delivery of the data frame, and avoid a case in which a speed of generating and feeding back the block acknowledgment frame is affected because a speed of generating the block acknowledgment frame by software is limited.

It should be understood that the modules shown in FIG. 12 to FIG. 14 are merely examples. With reference to the method parts in embodiments of this application, the modules may perform operations of the modules, or perform variations of the operations of the modules. In the example provided in this embodiment of this application, the block acknowledgment scoreboard control module (or the first block acknowledgment scoreboard control module and the second block acknowledgment scoreboard control module) is mainly responsible for recording the arrival status in the block acknowledgment scoreboard and returning the block acknowledgment frame to the transmit end; and the reordering buffer queue control module is mainly responsible for MPDU delivery, deduplication, reordering an MPDU of an in-order service, and the like. During actual application, these modules may also perform other operations. This is not limited to the examples in this embodiment of this application.

Embodiments of this application provide another data frame delivery apparatus. FIG. 15 is a diagram 1 of a structure of a second apparatus according to an embodiment of this application. The second apparatus 30 includes at least one control module. The control modules are coupled to each other. As shown in FIG. 15, the control module includes a delivery scoreboard control module 301 and a reordering buffer queue control module 302.

The delivery scoreboard control module 301 is configured to control a delivery scoreboard to record a delivery status of a data frame corresponding to a sequence number.

The reordering buffer queue control module 302 is configured to control a reordering buffer queue. The reordering buffer queue is used to buffer the data frame corresponding to the sequence number.

The reordering buffer queue control module 302 is further configured to: determine, based on a buffer status of a window that is in the reordering buffer queue and that is of the data frame corresponding to the sequence number and the delivery status that is of the data frame corresponding to the sequence number and that is recorded in the delivery scoreboard, whether each data frame in at least one data frame with a sequence number has arrived; and for a first data frame determined as not yet arrived based on the delivery scoreboard and the reordering buffer queue, perform a delivery operation on the first data frame with a corresponding sequence number after the first data frame with the corresponding sequence number arrives.

In a possible implementation, the reordering buffer queue control module 302 is further configured to: for a second data frame determined as arrived based on the delivery scoreboard and the reordering buffer queue, discard the second data frame with a corresponding sequence number after the second data frame with the corresponding sequence number arrives again.

The second apparatus may be used in the delivery methods shown in FIG. 8 to FIG. 11 and shown in the examples in S401 and S402, S501 to S508, and the like. The second apparatus may further include a transceiver module, mainly configured to receive a plurality of data frames, for example, MPDUs, with different SNs sent by a transmit end. After receiving the MPDU, the reordering buffer queue control module 302 queries the delivery scoreboard and the reordering buffer queue, to determine whether a received MPDU with each SN is an MPDU that has arrived. For example, if a value in a window that is in the delivery scoreboard and that corresponds to an MPDU with an SN is 0, and a window that is in the reordering buffer queue and that corresponds to the MPDU with the SN is empty, it may be determined that the MPDU with the SN has not arrived. Otherwise, it is determined that the MPDU has arrived. If it is determined that the MPDU is an MPDU that has arrived, the MPDU is discarded. If it is determined that the MPDU is an MPDU that has not arrived, that is, an MPDU arriving for the first time, it is determined, based on the foregoing examples, whether the MPDU is an MPDU for in-order delivery or an MPDU for out-of-order delivery. If the MPDU is for in-order delivery, the MPDU is buffered in the reordering buffer queue. If the MPDU is for out-of-order delivery, the MPDU is immediately delivered. Each time delivery is performed, the delivery scoreboard control module 301 performs control to refresh the delivery scoreboard once. Each time an MPDU for in-order delivery is buffered, the reordering buffer queue control module 302 performs control to refresh the reordering buffer queue once, and after the MPDU in the reordering buffer queue is delivered, performs control to refresh the reordering buffer queue once. Optionally, for refreshing of the delivery scoreboard control module 301 and the reordering buffer queue control module 302, refer to the example in S501 to S508 and the examples in FIG. 8 to FIG. 11. Details are not described again.

In a possible implementation, the reordering buffer queue control module 302 is specifically configured to: after the receiving module receives the first data frame with the corresponding sequence number, determine that the first data frame is a data frame for in-order delivery, and buffer the first data frame in the reordering buffer queue; and after an initial data frame for in-order delivery is buffered in the reordering buffer queue, deliver the first data frame and the initial data frame together based on the reordering buffer queue and the delivery scoreboard.

In a possible implementation, the reordering buffer queue control module 302 is specifically configured to: after the receiving module receives the first data frame with the corresponding sequence number, determine that the first data frame is a data frame for in-order delivery, and buffer the first data frame in the reordering buffer queue; if at least one data frame whose corresponding sequence number is smaller than that of the first data frame is delivered, refresh the reordering buffer queue, and update, to delivered, a delivery status that is in the delivery scoreboard and that corresponds to the at least one data frame; and after each data frame for in-order delivery with a sequence number smaller than that of the first data frame, including an initial data frame, is buffered in the reordering buffer queue, deliver the first data frame and a previous data frame together, where the previous data frame includes the initial data frame and each data frame that is for in-order delivery and whose corresponding sequence number is smaller than that of the first data frame.

In a possible implementation, after the first data frame and the initial data frame are delivered together, the reordering buffer queue control module 302 refreshes the reordering buffer queue, and the delivery scoreboard control module 301 refreshes the delivery scoreboard.

In a possible implementation, after the transceiver module receives the first data frame with the corresponding sequence number, the reordering buffer queue control module 302 determines that the first data frame is the initial data frame for in-order delivery, delivers the initial data frame, and refreshes the reordering buffer queue; and the delivery scoreboard control module 301 refreshes the delivery scoreboard.

In the foregoing possible implementations, for a specific delivery method, a method for refreshing the reordering buffer queue, and a method for refreshing the delivery scoreboard, refer to the examples in S301 to S308.

In a possible implementation, after the first data frame with the corresponding sequence number is received, it is determined that the first data frame is a data frame for out-of-order delivery, and the first data frame is immediately delivered. For details, refer to the method for delivering the MPDU for out-of-order delivery shown in FIG. 8 to FIG. 11.

In a possible implementation, the delivery scoreboard control module 301 is further configured to: after the reordering buffer queue control module 302 successfully delivers the first data frame, update, to delivered, a delivery status that is in the delivery scoreboard and that corresponds to the first data frame. The reordering buffer queue control module 302 updates, to empty, a buffer status corresponding to the first data frame in the reordering buffer queue.

The delivery scoreboard control module 301 and the reordering buffer queue control module 302 in the second apparatus 30 may be both implemented by using software or hardware. For example, the delivery scoreboard control module 301 may be a hardware module, and the reordering buffer queue control module 302 may also be a hardware module. For example, the delivery scoreboard control module 301 may be a chip (included) produced according to different standards, for example, a hardware module in an 802.11 chip, and the reordering buffer queue control module 302 may be another hardware module in the 802.11 chip, or the delivery scoreboard control module 301 and the reordering buffer queue control module 302 are integrated into a hardware module in an 802.11 chip. Alternatively, the delivery scoreboard control module 301 and the reordering buffer queue control module 302 are both software modules, and may run on a CPU. Alternatively, in the delivery scoreboard control module 301 and the reordering buffer queue control module 302, one is a software module, and the other is a hardware module, or the like.

It should be understood that the modules shown in FIG. 15 are merely examples. With reference to the method parts in embodiments of this application, the modules may perform operations of the modules, or perform variations of the operations of the modules. The functions implemented by the modules shown in FIG. 15 are also examples. In a possible implementation, after the second apparatus 30 receives the data frame, the delivery scoreboard control module 301 may alternatively deliver the data frame based on the fact that the data frame has not arrived, or discard the data frame based on the fact that the data frame is a data frame having arrived. This is not limited to the foregoing example.

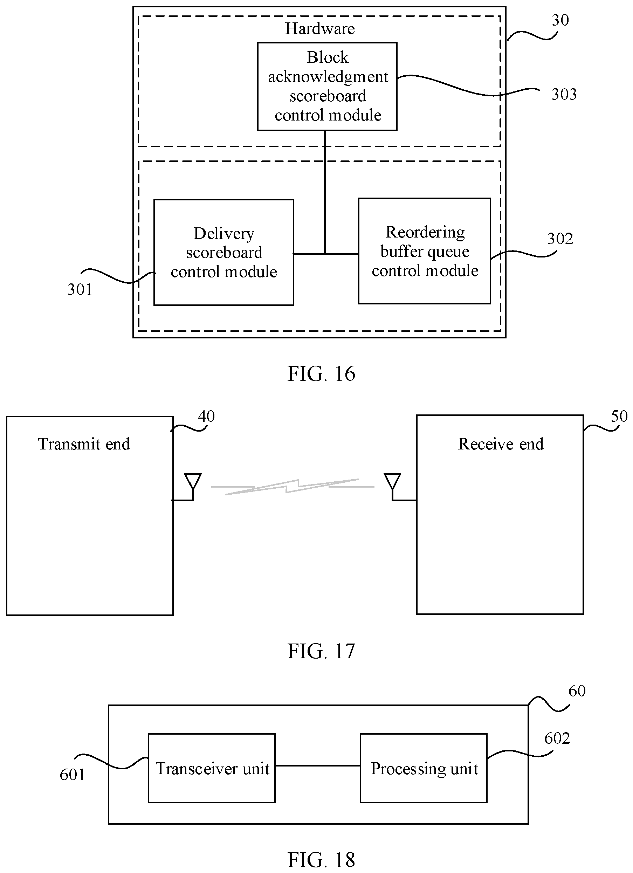

Further, when the second apparatus receives the data frame, a block acknowledgment scoreboard control module further needs to be maintained, and is configured to: generate and send a block acknowledgment frame. The block acknowledgment frame has a high delay requirement. Therefore, as shown in FIG. 16, the second apparatus 30 further includes a block acknowledgment scoreboard control module 303 that is configured to: generate and send the block acknowledgment frame, and is implemented by using hardware. The delivery scoreboard control module 301 and the reordering buffer queue control module 302 may be both implemented by using software or hardware.

Optionally, the block acknowledgment scoreboard control module 303 may further control a block acknowledgment scoreboard to record an arrival status when each data frame corresponding to a sequence number arrives. The control function may be implemented by using software or hardware.

FIG. 17 is a diagram of a structure of a data frame delivery system according to an embodiment of this application. The delivery method provided in embodiments of this application may be applied to a scenario of the system. The system includes a transmit end 40 and a receive end 50. The transmit end 40 and the receive end 50 are both devices that support the IEEE 802.11be/Wi-Fi 7/EHT protocol, the IEEE 802.11bn/UHR/Wi-Fi 8 protocol, and the IEEE 802.15/UWB protocol. For example, the transmit end 40 may be a communication apparatus serving as an access point (Access Point, AP) site (logical function). The communication apparatus may be a terminal, a communication assembly in the terminal, or a circuit or a chip (for example, a modem (Modem) chip, also referred to as a baseband (baseband) chip, or a system on chip (System on Chip, SoC) chip or a system in package (System in Package, SIP) chip including a modem core) that is responsible for a communication function in the terminal.

The receive end 50 may be a communication apparatus serving as a non-AP site (logical function). The communication apparatus may be a terminal, a communication assembly in the terminal, or a circuit or a chip (for example, a modem (Modem) chip, also referred to as a baseband (baseband) chip, or a system on chip (System on Chip, SoC) chip or a system in package (System in Package, SIP) chip including a modem core) that is responsible for a communication function in the terminal.

The transmit end 40 is mainly configured to generate SNs for all sent data frames, for example, MPDUs, in a service generation order, for example, generate ascending SNs, and is responsible for sending the MPDU, resending, based on a block acknowledgment frame, an MPDU that fails to be sent, and the like.

The receive end 50 is mainly configured to determine, based on whether the MPDU has arrived, whether to deliver the MPDU, and may be further responsible for reading and writing (namely, querying and updating) an arrival status in a block acknowledgment scoreboard, controlling a reordering buffer queue to perform reordering buffering on an MPDU of an in-order service, reading and writing a delivery status in a delivery scoreboard, and the like. For details, refer to the foregoing examples in FIG. 1 to FIG. 16 to implement MPDU delivery.

In addition, FIG. 18 is a diagram of a structure of a device 60 according to an embodiment of this application. The device 60 shown in FIG. 18 includes a transceiver unit 601 and a processing unit 602. The device 60 may be configured to perform S101 to S103, S201 to S207, S301 to S310, S401 and S402, or S501 to S509 in the method in the foregoing embodiment. When being configured to perform S101 to S103, S201 to S207, or S301 to S310 in the method in the foregoing embodiment, the device 60 is equivalent to the first apparatus illustrated in the method. When being configured to perform S401 and S402 or S501 to S509 in the method in the foregoing embodiment, the device 60 is equivalent to the second apparatus illustrated in the method.

It should be noted that, in embodiments of this application, division into the units is an example, is merely logical function division, and may be other division during actual implementation. Functional units in embodiments of this application may be integrated into one processing unit, or each of the units may exist alone physically, or two or more units may be integrated into one unit. For example, in the foregoing embodiment, the transceiver unit 601 and the processing unit 602 included in the device 60 may be a same unit or may be different units; and the transceiver unit 601 and the processing unit 602 included in the device 60 may be a same unit or may be different units. The integrated unit may be implemented in a form of hardware, for example, a chip, or may be implemented in a form of a software functional unit.

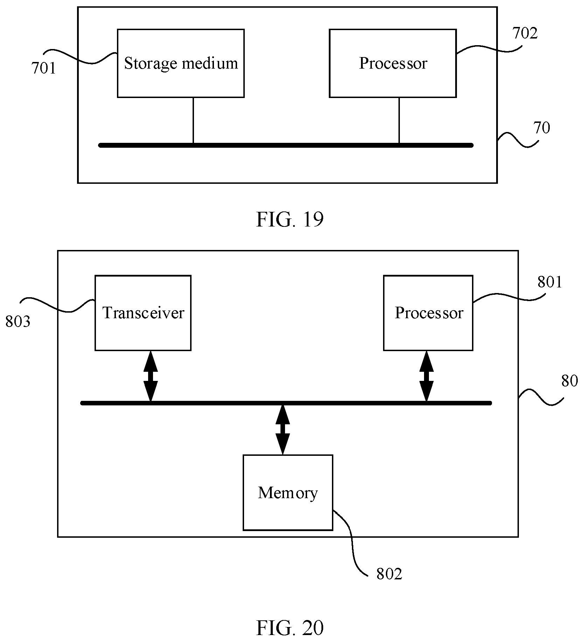

In addition, an embodiment of this application further provides a communication apparatus 70. FIG. 19 is a diagram of a structure of the communication apparatus 70 according to an embodiment of this application. The communication apparatus 70 includes a storage medium 701 and a processor 702 connected to the storage medium 701. The storage medium 701 may buffer a data frame, for example, an MPDU. The processor 702 may be configured to perform various operations in the method in the foregoing embodiments.

In addition, an embodiment of this application further provides a device 80. FIG. 20 is a diagram of a structure of the device 80 according to an embodiment of this application. As shown in FIG. 20, the device 80 may include a processor 801, a memory 802 coupled to the processor 801, and a transceiver 803. The transceiver 803 may be a communication interface, an optical module, or the like, and is configured to receive a packet, data information, or the like. The processor 801 may be a central processing unit (Central Processing Unit, CPU), a network processor (Network Processor, NP), or a combination of the CPU and the NP, and is configured to perform steps related to forwarding processing in the device illustrated in the foregoing embodiments. The processor may alternatively be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), generic array logic (Generic Array Logic, GAL), or any combination thereof. The processor 801 may be one processor, or may include a plurality of processors. The memory 802 may include a volatile memory (volatile memory), for example, a random-access memory (Random-Access Memory, RAM). The memory may also include a non-volatile memory (non-volatile memory), for example, a read-only memory (Read-Only Memory, ROM), a flash memory (flash memory), a hard disk drive (Hard Disk Drive, HDD), or a solid-state drive (Solid-State Drive, SSD). The memory 802 may further include a combination of the foregoing types of memories. The memory 802 may be one memory, or may include a plurality of memories, and is configured to store program instructions. In an implementation, the memory 802 stores computer-readable instructions, and the computer-readable instructions include a plurality of software modules, for example, a sending module, a processing module, and a receiving module. After executing each software module, the processor 801 may perform a corresponding operation based on an indication of each software module. In this embodiment, an operation performed by a software module is actually an operation performed by the processor 801 based on an indication of the software module. Optionally, the processor 801 may also store program code or instructions for performing the solutions in embodiments of this application. In this case, the processor 801 does not need to read the program code or the instructions from the memory 802.

The device 80 may be configured to perform the method in the foregoing embodiments. Specifically, the device 80 may perform operations performed by the receive end in S101 to S103, S201 to S207, S301 to S310, S401 and S402, or S501 to S509 in the foregoing method.

An embodiment of this application further provides a computer-readable storage medium. The computer-readable storage medium stores instructions. When the instructions are run on a processor, a part or all of operations in any method in any one of the foregoing embodiments are implemented.

An embodiment of this application further provides a computer program product, including a computer program. When the computer program is run on a processor, a part or all of operations in any method in any one of the foregoing embodiments are implemented.

An embodiment of this application further provides a chip, including an interface circuit and a processor. The interface circuit is connected to the processor, and the processor is configured to enable the chip to perform a part or all of operations in any method in any one of the foregoing embodiments.

An embodiment of this application further provides a chip system, including a processor. The processor is coupled to a memory. The memory is configured to store a program or instructions. When the program or the instructions are executed by the processor, the chip system is enabled to implement a part or all of operations in any method in any one of the foregoing embodiments.

Optionally, there may be one or more processors in the chip system. The processor may be implemented by using hardware, or may be implemented by using software. When being implemented by using the hardware, the processor may be a logic circuit, an integrated circuit, or the like. When being implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-volatile processor, for example, a read-only memory ROM. The memory and the processor may be integrated into a same chip, or may be respectively disposed on different chips. A type of the memory and a manner of disposing the memory and the processor are not specifically limited in embodiments of this application.

For example, the chip system may be an FPGA, an ASIC, a system on chip (System on Chip, SoC), a CPU, an NP, a digital signal processor (Digital Signal Processor, DSP), a microcontroller unit (Microcontroller Unit, MCU), a programmable device (Programmable Logic Device, PLD), or another integrated chip.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way are interchangeable in appropriate circumstances so that embodiments described herein can be implemented in other orders than the order illustrated or described herein. In addition, the terms "include" and "have" and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.

It may be clearly understood by persons skilled in the art that, for convenience and brevity of description, for a detailed working process of the foregoing system, apparatus, or unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical service division, and may be other division during actual implementation. For example, a plurality of units or components may be combined or integrated into another system, or some features may be ignored or not performed. In addition, the displayed or discussed mutual couplings, direct couplings, or communication connections may be implemented via some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. A part or all of the units may be selected based on actual requirements to achieve the objectives of the solutions in embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When being implemented in the form of the software service unit and sold or used as an independent product, the integrated unit may be stored in a computer-readable storage medium. Based on such an understanding, a part or some of the technical solutions in this application may be implemented in a form of a software product. The computer software product is stored in a storage medium and includes several instructions for instructing a computer device (which may be a personal computer, a server, a network device, or the like) to perform all or a part of the steps of the method in each embodiment of this application. The foregoing storage medium includes any medium that can store program code, for example, a USB flash drive, a removable hard disk, a ROM, a RAM (Random-Access Memory), a magnetic disk, or an optical disc.

Persons skilled in the art should be aware that, in the foregoing one or more examples, the services described in this application may be implemented by hardware, software, firmware, or any combination thereof. When being implemented by the software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another place. The storage medium may be any available medium accessible to a general-purpose or a dedicated computer.

In the foregoing specific implementations, the objectives, technical solutions, and beneficial effect of this application are further described in detail. It should be understood that the foregoing descriptions are merely specific implementations of this application.

In conclusion, the foregoing embodiments are intended merely to describe the technical solutions in this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A data frame delivery method, comprising:
determining, based on an arrival status that is of a data frame corresponding to a sequence number and that is recorded in a block acknowledgment scoreboard, whether each data frame in at least one data frame with a sequence number has arrived; and
for a first data frame recorded as not yet arrived in the block acknowledgment scoreboard, performing a delivery operation on the first data frame with a corresponding sequence number after the first data frame with the corresponding sequence number arrives.

2. The data frame delivery method according to claim 1, wherein the method further comprises: for a second data frame recorded as arrived in the block acknowledgment scoreboard, discarding the second data frame with a corresponding sequence number after the second data frame with the corresponding sequence number arrives again.

3. The data frame delivery method according to claim 1 or 2, wherein for the first data frame recorded as not yet arrived in the block acknowledgment scoreboard, performing the delivery operation on the first data frame with the corresponding sequence number after the first data frame with the corresponding sequence number arrives comprises:
after the first data frame with the corresponding sequence number is received, determining that the first data frame is a data frame for in-order delivery, and buffering the first data frame in a reordering buffer queue; and
after an initial data frame for in-order delivery is buffered in the reordering buffer queue, delivering the first data frame and the initial data frame together.

4. The data frame delivery method according to claim 1 or 2, wherein for the first data frame recorded as not yet arrived in the block acknowledgment scoreboard, performing the delivery operation on the first data frame with the corresponding sequence number after the first data frame with the corresponding sequence number arrives comprises:
after the first data frame with the corresponding sequence number is received, determining that the first data frame is a data frame for in-order delivery, and buffering the first data frame in a reordering buffer queue; and
after each data frame with a sequence number smaller than that of the first data frame, comprising an initial data frame, is buffered in the reordering buffer queue, delivering the first data frame and a previous data frame together, wherein the previous data frame comprises the initial data frame and each data frame whose corresponding sequence number is smaller than that of the first data frame.

5. The data frame delivery method according to claim 3 or 4, wherein after the first data frame and the initial data frame are delivered together, the reordering buffer queue is refreshed.

6. The data frame delivery method according to any one of claims 1 to 5, wherein for the first data frame recorded as not yet arrived in the block acknowledgment scoreboard, performing the delivery operation on the first data frame with the corresponding sequence number after the first data frame with the corresponding sequence number arrives comprises:
after the first data frame with the corresponding sequence number is received, determining that the first data frame is the initial data frame for in-order delivery; and
delivering the initial data frame, and refreshing the reordering buffer queue.

7. The data frame delivery method according to claim 1 or 2, wherein for the first data frame recorded as not yet arrived in the block acknowledgment scoreboard, performing the delivery operation on the first data frame with the corresponding sequence number after the first data frame with the corresponding sequence number arrives comprises:
after the first data frame with the corresponding sequence number is received, determining that the first data frame is a data frame for out-of-order delivery, and immediately delivering the first data frame.

8. The data frame delivery method according to any one of claims 1 to 7, wherein the method further comprises:
after the first data frame is successfully delivered, updating, to arrived, the arrival status that is in the block acknowledgment scoreboard and that corresponds to the first data frame.

9. A data frame delivery method, comprising:
determining, based on a buffer status of a window that is in a reordering buffer queue and that is of the data frame corresponding to a sequence number and a delivery status that is of the data frame corresponding to the sequence number and that is recorded in a delivery scoreboard, whether each data frame in at least one data frame with a sequence number has arrived; and
for a first data frame determined as not yet arrived based on the delivery scoreboard and the reordering buffer queue, performing a delivery operation on the first data frame with a corresponding sequence number after the first data frame with the corresponding sequence number arrives.

10. The data frame delivery method according to claim 9, wherein the method further comprises: for a second data frame determined as arrived based on the delivery scoreboard and the reordering buffer queue, discarding the second data frame with a corresponding sequence number after the second data frame with the corresponding sequence number arrives again.

11. The data frame delivery method according to claim 9 or 10, wherein for the first data frame determined as not yet arrived based on the delivery scoreboard and the reordering buffer queue, performing the delivery operation on the first data frame with the corresponding sequence number after the first data frame with the corresponding sequence number arrives comprises:
after the first data frame with the corresponding sequence number is received, determining that the first data frame is a data frame for in-order delivery, and buffering the first data frame in the reordering buffer queue; and
after an initial data frame for in-order delivery is buffered in the reordering buffer queue, delivering the first data frame and the initial data frame together.

12. The data frame delivery method according to claim 9 or 10, wherein for the first data frame determined as not yet arrived based on the delivery scoreboard and the reordering buffer queue, performing the delivery operation on the first data frame with the corresponding sequence number after the first data frame with the corresponding sequence number arrives comprises:
after the first data frame with the corresponding sequence number is received, determining that the first data frame is a data frame for in-order delivery, and buffering the first data frame in the reordering buffer queue;
if at least one data frame whose corresponding sequence number is smaller than that of the first data frame is delivered, refreshing the reordering buffer queue, and updating, to delivered, a delivery status that is in the delivery scoreboard and that corresponds to the at least one data frame; and
after each data frame for in-order delivery with a sequence number smaller than that of the first data frame, comprising an initial data frame, is buffered in the reordering buffer queue, delivering the first data frame and a previous data frame together, wherein the previous data frame comprises the initial data frame and each data frame that is for in-order delivery and whose corresponding sequence number is smaller than that of the first data frame.

13. The data frame delivery method according to claim 11 or 12, wherein after the first data frame and the initial data frame are delivered together, the reordering buffer queue and the delivery scoreboard are refreshed.

14. The data frame delivery method according to any one of claims 9 to 13, wherein for the first data frame determined as not yet arrived based on the delivery scoreboard and the reordering buffer queue, performing the delivery operation on the first data frame with the corresponding sequence number after the first data frame with the corresponding sequence number arrives comprises:
after the first data frame with the corresponding sequence number is received, determining that the first data frame is the initial data frame for in-order delivery; and
delivering the initial data frame, and refreshing the reordering buffer queue and the delivery scoreboard.

15. The data frame delivery method according to claim 9 or 10, wherein for the first data frame determined as not yet arrived based on the delivery scoreboard and the reordering buffer queue, performing the delivery operation on the first data frame with the corresponding sequence number after the first data frame with the corresponding sequence number arrives comprises:
after the first data frame with the corresponding sequence number is received, determining that the first data frame is a data frame for out-of-order delivery, and immediately delivering the first data frame.

16. The data frame delivery method according to any one of claims 9 to 15, wherein the method further comprises:
after the first data frame is successfully delivered, updating, to delivered, a delivery status that is in the delivery scoreboard and that corresponds to the first data frame, and updating, to empty, a buffer status corresponding to the first data frame in the reordering buffer queue.

17. A first apparatus, comprising at least one control module, wherein the at least one control module comprises a block acknowledgment scoreboard control module and a reordering buffer queue control module that are coupled to each other, and the at least one control module implements the method according to any one of claims 1 to 8.

18. A second apparatus, comprising at least one control module and a transceiver module, wherein the at least one control module comprises a block acknowledgment scoreboard control module and a reordering buffer queue control module that are coupled to each other, and the at least one control module implements the method according to any one of claims 9 to 16.

19. A communication apparatus, wherein the communication apparatus comprises a processor and a storage medium, the storage medium stores instructions, and when the instructions are run by the processor, the method according to any one of claims 1 to 8 is implemented, or the method according to any one of claims 9 to 16 is implemented.

20. A computer-readable storage medium, wherein the computer-readable storage medium comprises instructions, and when the instructions are run by a processor, the method according to any one of claims 1 to 8 is implemented, or the method according to any one of claims 9 to 16 is implemented.

21. A computer program product, wherein the computer program product comprises instructions, and when the instructions are run by a processor, the method according to any one of claims 1 to 8 is implemented, or the method according to any one of claims 9 to 16 is implemented.
